# EUROPEAN PATENT APPLICATION

(11) **EP 4 213 231 A1**
(43) Date of publication of application: **19.07.2023**
(21) Application number: 20967787.1
(22) Date of filing: 31.12.2020
(51) Int. Cl.: H01M 4/13, H01M 10/0525

(54) **ELECTROCHEMICAL DEVICE, ELECTRONIC DEVICE AND ELECTROCHEMICAL DEVICE MANUFACTURING METHOD**

(71) Applicant: Dongguan Amperex Technology Limited, Dongguan, Guangdong 523808 (CN)
(72) Inventor: LIU, Xiaoqian, Dongguan, Guangdong 523808 (CN); HAN, Dongdong, Dongguan, Guangdong 523808 (CN)
(74) Representative: Icosa
(86) International application number: PCT/CN2020/142272
(87) International publication number: WO 2022/141448

(57) **Abstract**

This application provides an electrochemical apparatus, an electronic apparatus, and a preparation method of electrochemical apparatus. The electrochemical apparatus includes a positive electrode. The positive electrode includes a current collector, a first material layer, and a second material layer. The second material layer is disposed on at least one surface of the current collector, and the first material layer is disposed between the current collector and the second material layer. The first material layer includes a leveling agent. A difference between the maximum value and the minimum value of thickness of the first material layer is less than or equal to 3 µm. The obtained positive electrode has high uniformity in thickness, and there is strong adhesion between the current collector and the first material layer, and between the second material layer and the first material layer. The positive electrode is applied to the electrochemical apparatus or electronic apparatus, so that the probability of safety accidents caused by external forces such as impact or puncture can be effectively reduced, thereby improving the safety and reliability of the electrochemical apparatus or electronic apparatus.

## Description

### TECHNICAL FIELD

This application relates to the electrochemical field, and specifically, to an electrochemical apparatus, an electronic apparatus, and a method of preparing electrochemical apparatus.

### BACKGROUND

Lithium-ion batteries have advantages such as high energy storage density, high open-circuit voltage, low self-discharge rate, long cycle life, and high safety, and therefore are widely used in various fields such as electric energy storage, mobile electronic devices, electric vehicles, and aerospace equipment. As the mobile electronic devices and the electric vehicles enter a stage of rapid development, the market requires lithium-ion secondary batteries to have higher energy density, safety performance, cycling performance, and service life. The safety performance is particularly important.

Currently, during use of lithium-ion batteries, there are still cases that fires are caused by external forces such as impact or puncture, thereby posing a threat to human life and health, or the environment. The lack of safety and reliability hinder expansion of application field and application range of lithium-ion batteries. Therefore, it is urgent to develop lithium-ion batteries with high safety and reliability.

### SUMMARY

This application is intended to provide an electrochemical apparatus, an electronic apparatus, and a method of preparing electrochemical apparatus, so as to improve safety and reliability of the electrochemical apparatus.

It should be noted that in the following content, an example in which a lithium-ion battery is an electrochemical apparatus is used to explain this application. However, the electrochemical apparatus in this application is not limited to the lithium-ion battery.

Specific technical solutions are as follows.

A first aspect of this application provides an electrochemical apparatus including a positive electrode. The positive electrode includes a current collector, a first material layer, and a second material layer. The second material layer is disposed on at least one surface of the current collector, and the first material layer is disposed between the current collector and the second material layer. The first material layer includes a leveling agent. A difference between the maximum value and the minimum value of thickness of the first material layer is less than or equal to 3 µm.

Without being limited to any theory, when the difference between the maximum value and the minimum value of the thickness of the first material layer is excessively large, for example, greater than 3 µm, the first material layer has poor uniformity in thickness, so that it is easy to have a thin coating in some regions, thereby reducing structural reliability of the electrochemical apparatus.

In an embodiment of this application, the leveling agent is a polymer with a weight-average molecular weight of less than or equal to 50,000. For example, the leveling agent may be a polymer of olefin derivatives, a siloxane polymer, an enoate polymer, an alcohol polymer, or an ether polymer having a weight-average molecular weight of no more than 50,000. With a molecular weight of the leveling agent controlled within the above range, the leveling agent can interact with a binder to improve leveling of a slurry of the first material layer, thereby making the thickness of the first material layer more uniform.

In an embodiment of this application, the leveling agent may include at least one of a polymer of olefin derivatives, a carboxylate polymer, a siloxane polymer, an enoate polymer, an alcohol polymer, or an ether polymer. The weight-average molecular weight of the leveling agent may alternatively be less than or equal to 50,000.

In an embodiment of this application, the leveling agent includes at least one of a sodium carboxylate polymer, a polymer of oxygen-containing propylene hydrocarbon derivatives, or polysiloxane. Preferably, the leveling agent includes polyethoxy propoxy propylene hydrocarbon. The weight-average molecular weight of the leveling agent may alternatively be less than or equal to 50,000.

In an embodiment of this application, the first material layer further includes an active material, a binder, and a conductive agent. Based on a total mass of the first material layer, a mass percentage of the active material ranges from 50% to 98.89%, a mass percentage of the binder ranges from 1% to 20%, a mass percentage of the conductive agent ranges from 0.1% to 20%, and a mass percentage of the leveling agent ranges from 0.01% to 10%. Without being limited to any theory, by controlled the percentages of the active material, the binder, the conductive agent, and the leveling agent within the above range, the thickness of the obtained first material layer can be more uniform, and performance of all parts can be consistent. When impacted or punctured by external forces, a local part of the first material layer is not easily damaged. In addition, adhesion between the current collector and the first material layer, and adhesion between the second material layer and the first material layer are improved, thereby improving the safety and reliability of the electrochemical apparatus.

In the electrochemical apparatus in this application, the current collector includes the first material layer and the second material layer disposed in sequence on at least one surface of the current collector. The first material layer and the second material layer can be disposed on one surface of the current collector or two surfaces of the current collector.

In an embodiment of this application, the binder includes at least one of a copolymer of propylene hydrocarbon derivatives, polyacrylates, an acrylonitrile multipolymer, or a carboxymethyl cellulose salt. Preferably, the binder includes a polymer formed by polymerization of at least one monomer of acrylonitrile, acrylic salt, acrylamide, or acrylate.

The binder in this application may be an aqueous binder. Metal ions in the acrylic salt can replace some hydrogen ions, thereby increasing the hydrophilicity of the binder, reducing swelling of the binder in an electrolyte, and maintaining high adhesion. In addition, because the hydrogen ions are easy to acquire electrons to form hydrogen, when the hydrogen ions are reduced, swelling of the lithium-ion battery caused by excessive hydrogen ions can also be prevented.

In an embodiment of this application, based on a total mass of the polymer, a mass percentage of the acrylonitrile ranges from 25% to 70%, a mass percentage of the acrylic salt ranges from 10% to 60%, a mass percentage of the acrylamide ranges from 10% to 60%, and a mass percentage of the acrylate ranges from 0% to 10%. Without being limited to any theory, with the mass percentages of the acrylonitrile, the acrylic salt, the acrylamide, and the acrylate controlled within the above ranges, the binder with desired adhesion can be obtained, thereby improving the adhesion between the first material layer and the current collector.

In an embodiment of this application, a weight-average molecular weight of the binder ranges from 100,000 to 2,000,000, and preferably 300,000 to 800,000. Without being limited to any theory, if the weight-average molecular weight of the binder is excessively large, a thickening effect of the binder is excessively strong, which results in high viscosity and poor fluidity of a slurry, so that the slurry does not cover the whole first material layer. If the weight-average molecular weight of the binder is excessively small, the viscosity of the slurry is excessively low and film-forming property of the slurry is poor, so that the slurry does not cover the whole first material layer. Without being limited to any theory, with the weight-average molecular weight of the binder controlled within the above range, a material of the first material layer can form a film with uniform thickness on the surface of the current collector, and the adhesion between the first material layer and the current collector, and between the first material layer and the second material layer can be improved.

In an embodiment of this application, the thickness of the first material layer ranges from 0.05 µm to 20 µm, and preferably 0.1 µm to 15 µm. Without being limited to any theory, when the thickness of the first material layer is excessively low, for example, lower than 0.05 µm, the safety and reliability of the electrochemical apparatus is reduced, and it is difficult to ensure uniformity of the whole first material layer during a preparation process, while preparation difficulty and cost increase. When the thickness of the first material layer is excessively high, for example, higher than 20 µm, a relative percentage of the active material in the positive electrode decreases, which affects energy density of the lithium-ion battery.

In an embodiment of this application, a resistance of the fully charged positive electrode is greater than 10 Ω, and preferably 30 S2 to 100 Ω. With the resistance of the positive electrode controlled within the above range, internal resistance of the lithium-ion battery in the event of a short circuit can be increased, a short-circuit current can be reduced, and a temperature rise can be reduced, thereby improving the safety of the lithium-ion battery.

In an embodiment of this application, a Dᵥ99 of the active material ranges from 0.01 µm to 19.9 µm, and preferably 0.01 µm to 10 µm. Without being limited to any theory, with Dᵥ99 of the active material controlled within the above range, flatness of the first material layer can be improved. It is advisable that Dᵥ99 of the active material does not exceed the thickness of the first material layer, otherwise an aluminum foil is easily punctured during cold pressing.

In an embodiment of this application, the conductive agent is not particularly limited, provided that the objectives of this application can be achieved. Without being limited to any theory, if the percentage of the conductive agent contained in the first material layer is excessively high, and conductivity of the first material layer is excessively high, it is more likely to cause fire or explode in a nail penetration test. If a percentage of the conductive agent is excessively low, electrochemical performance of the lithium-ion battery is affected. The conductive agent is not limited to a particular shape in this application. For example, the conductive agent can include at least one of lamellar, reticular, linear, or zero-dimensional conductive agent. Preferably, the conductive agent may include at least one of graphene, reticular graphite fiber, carbon nanotubes, Ketjen black, graphite fiber, or nano-particle conductive carbon.

In an embodiment of this application, a thickness of the second material layer ranges from 20 µm to 200 µm. Without being limited to any theory, when the thickness of the second material layer is excessively low, for example, lower than 20 µm, energy density of a battery cell is affected, and the second material layer is difficult to be processed. When the thickness of the second material layer is excessively high, for example, higher than 200 µm, a migration rate of the lithium ions is affected, thereby affecting the electrochemical performance of the lithium-ion battery.

In an embodiment of this application, the second material layer includes a second active material. In this application, the active material in the first material layer and the second active material may be the same or different.

In the lithium-ion battery in this application, the active material in the first material layer and the second active material are not particularly limited. For example, the active material in the first material layer and the second active material may each independently include at least one of lithium nickel cobalt manganate (811, 622, 523, 111), lithium nickel cobalt aluminate, lithium iron phosphate, a lithium-rich manganese-base material, lithium manganate oxide, lithium manganese iron phosphate, or lithium titanate. The lithium-ion battery made of the above active materials has higher safety and reliability.

In the positive electrode in this application, the current collector is not particularly limited, for example, aluminum foil, aluminum alloy foil, or a composite current collector. In this application, thickness of a positive electrode current collector is not particularly limited, provided that the objectives of this application can be achieved. For example, the thickness of the positive electrode current collector ranges from 8 µm to 15 µm.

The negative electrode in this application is not particularly limited, provided that the objectives of this application can be achieved. For example, the negative electrode generally includes a negative electrode current collector and a negative electrode active material layer. The negative electrode current collector is not particularly limited, for example, it may be a copper foil, aluminum foil, copper alloy foil, or a composite current collector. The negative electrode active material layer includes a negative electrode active material. The negative electrode active material is not particularly limited. For example, the negative electrode active material may include at least one of artificial graphite, natural graphite, mesocarbon microbeads, soft carbon, hard carbon, silicon, silicon carbon, or lithium titanate. In this application, thicknesses of the negative electrode current collector and the negative electrode active material layer are not particularly limited, provided that the objectives of this application can be achieved. For example, the thickness of the negative electrode current collector ranges from 4 µm to 10 µm, and the thickness of the negative electrode active material layer ranges from 30 µm to 120 µm.

Optionally, the negative electrode may further include a conductive layer. The conductive layer is sandwiched between the negative electrode current collector and the negative electrode active material layer. The conductive layer includes a conductive agent and a binder. The conductive agent is not particularly limited, provided that the objectives of this application can be achieved. For example, the conductive agent may include at least one of conductive carbon black (Super P), carbon nanotubes (CNTs), carbon nanofibers, or graphene. The binder is not particularly limited, provided that the objectives of this application can be achieved. For example, the binder may include at least one of styrene butadiene rubber (SBR), polyvinyl alcohol (PVA), polytetrafluoroethylene ethylene (PTFE), sodium carboxymethyl cellulose (CMC-Na), or the like. For example, the binder may be styrene butadiene rubber (SBR).

Persons skilled in the art should understand that one surface of the negative electrode in this application may be provided with the negative electrode active material layer, or two surfaces of the negative electrode of this application may be provided with the negative electrode active material layer.

The lithium-ion battery in this application further includes a separator that is used to separate the positive electrode and the negative electrode, so as to prevent an internal short circuit of the lithium-ion battery, allow electrolyte ions to pass freely, and complete an electrochemical charging and discharging process. In this application, the separator is not particularly limited, provided that the objectives of this application can be achieved.

For example, the separator may be at least one of a polyethylene (PE) and polypropylene (PP)-based polyolefin (PO) separator, a polyester film (for example, a polyethylene terephthalate (PET) film), a cellulose film, a polyimide film (PI), a polyamide film (PA), a spandex or aramid film, a woven film, a non-woven film (non-woven fabric), a microporous film, a composite film, a separator paper, a laminated film, a spinning film, or the like.

For example, the separator may include a substrate layer and a surface treatment layer. The substrate layer may be a non-woven fabric, film, or composite film of a porous structure. The substrate layer may be made of at least one of polyethylene, polypropylene, polyethylene terephthalate, polyimide, or the like. Optionally, a polypropylene porous film, a polyethylene porous film, a polypropylene non-woven fabric, a polyethylene non-woven fabric, or a polypropylene-polyethylene-polypropylene porous composite film may be used. Optionally, the surface treatment layer is disposed on at least one surface of the substrate layer, and the surface treatment layer may be a polymer layer or an inorganic substance layer, or a layer formed by a polymer and an inorganic substance.

For example, the inorganic substance layer includes an inorganic particle and a binder. The inorganic particle is not particularly limited, and for example, may be selected from at least one of aluminum oxide, silicon oxide, magnesium oxide, titanium oxide, hafnium dioxide, tin oxide, cerium oxide, nickel oxide, zinc oxide, calcium oxide, zirconium oxide, yttrium oxide, silicon carbide, boehmite, aluminum hydroxide, magnesium hydroxide, calcium hydroxide, barium sulfate, or the like. The binder is not particularly limited, and for example, may be selected from a combination of one or more of polyvinylidene fluoride, a vinylidene fluoride-hexafluoropropylene copolymer, polyamide, polyacrylonitrile, polyacrylate, polyacrylic acid, polyacrylate, polyvinylpyrrolidone, polyvinyl ether, polymethyl methacrylate, polytetrafluoroethylene, and polyhexafluoropropylene. The polymer layer contains a polymer, and the polymer is made of at least one of polyamide, polyacrylonitrile, an acrylate polymer, polyacrylic acid, polyacrylate, polyvinylpyrrolidone, polyvinyl ether, polyvinylidene fluoride, poly(vinylidene fluoride-hexafluoropropylene), or the like.

The lithium-ion battery in this application further includes an electrolyte. The electrolyte may be one or more of a gel electrolyte, a solid electrolyte, and a liquid electrolyte. The liquid electrolyte includes a lithium salt and a non-aqueous solvent.

In some embodiments of this application, the lithium salt is selected from one or more of LiPF₆, LiBF₄, LiAsF₆, LiClO₄, LiB(C₆H₅)₄, LiCH₃SO₃, LiCF₃SO₃, LiN(SO₂CF₃)₂, LiC(SO₂CF₃)₃, LiSiF₆, LiBOB, and lithium difluoroborate. For example, LiPF₆ may be selected as the lithium salt because it can provide high ionic conductivity and improve cycling performance.

The non-aqueous solvent may be a carbonate compound, a carboxylate compound, an ether compound, another organic solvent, or a combination thereof.

The carbonate compound may be a linear carbonate compound, a cyclic carbonate compound, a fluorocarbonate compound, or a combination thereof.

An instance of the linear carbonate compound is dimethyl carbonate (DMC), diethyl carbonate (DEC), dipropyl carbonate (DPC), methyl propyl carbonate (MPC), ethylene propyl carbonate (EPC), ethyl methyl carbonate (MEC), or a combination thereof. An instance of the cyclic carbonate compound is ethylene carbonate (EC), propylene carbonate (PC), butylene carbonate (BC), vinyl ethylene carbonate (VEC), or a combination thereof. An instance of the fluorocarbonate compound is fluoroethylene carbonate (FEC), 4,5-difluoro-1,3-dioxolan-2-one, 4,4-difluoro-1,3-dioxolan-2-one, 4,4,5-trifluoro-1,3-dioxolan-2-one, 4,4,5,5-tetrafluoro-1,3-dioxolan-2-one, 4-fluoro-5-methyl-1,3-dioxolan-2-one, 4-fluoro-4-methyl-1,3-dioxolan-2-one, 4,5-difluoro-4-methyl-1,3-dioxolan-2-one, 4,4,5-trifluoro-5-methyl-1,3-dioxolan-2-one, 4-(trifluoromethyl)-1,3-dioxolan-2-one, or a combination thereof.

An instance of the carboxylate compound is methyl formate, methyl acetate, ethyl acetate, n-propyl acetate, tert-butyl acetate, methyl propionate, ethyl propionate, propyl propionate, γ-butyrolactone ester, caprolactone, valerolactone, mevalonolactone, caprolactone, or a combination thereof.

An instance of the ether compound is dibutyl ether, tetraglyme, diglyme, 1,2-dimethoxyethane, 1,2-diethoxyethane, ethoxymethoxyethane, 2-methyltetrahydrofuran, tetrahydrofuran, or a combination thereof.

An instance of the another organic solvent is dimethyl sulfoxide, 1,2-dioxolane, sulfolane, methyl sulfolane, 1,3-dimethyl-2-imidazolidinone, N-methyl-2-pyrrolidone, formamide, dimethylformamide, acetonitrile, trimethyl phosphate, triethyl phosphate, trioctyl phosphate, phosphate ester, or a combination thereof.

The method of preparing the binder in this application is not particularly limited, for example, the following method may be used.

Distilled water is added into a reactor, and the reactor starts stirring. After nitrogen is introduced for deoxidation, at least one of the above compositions such as acrylonitrile, acrylic salt, acrylamide, and acrylate is added based on different mass ratios. The reactor is heated to about 65°C in an inert atmosphere and maintains such temperature, and then an initiator is added to initiate a reaction. The reaction ends after about 20 hours.

The initiator in this application is not particularly limited, provided that monomer polymerization can be initiated. For example, the initiator may be a 20% ammonium persulfate solution. Amounts of the distilled water and the initiator are not particularly limited, provided that polymerization reaction of the added monomer can occur. After the reaction, lye is added to precipitate of the reaction for neutralization to make a pH value range from 6.5 to 9, and reaction products are processed by filtering, washing, drying, crushing, and screening.

A second aspect of this application provides a method of preparing the electrochemical apparatus described in the first aspect. The method includes forming the first material layer and the second material layer in sequence on at least one surface of the current collector, where the difference between the maximum value and the minimum value of the thickness of the first material layer is less than or equal to 3 µm.

In this application, the forming the first material layer and the second material layer in sequence on at least one surface of the current collector may be forming the first material layer and the second material layer in sequence on one surface of the current collector, or forming the first material layer and the second material layer in sequence on two surfaces of the current collector. The method of forming the first material layer and the second material layer is not particularly limited, provided that the objectives of this application can be achieved. For example, the method may be a coating method.

A third aspect of this application provides an electronic apparatus including the electrochemical apparatus according to the first aspect.

The electronic apparatus in this application is not particularly limited, and may be any known electronic apparatus used in the prior art. In some embodiments, the electronic apparatus may include but is not limited to a notebook computer, a pen-input computer, a mobile computer, an e-book player, a portable phone, a portable fax machine, a portable copier, a portable printer, a stereo headset, a video recorder, a liquid crystal display television, a portable cleaner, a portable CD player, a mini disc, a transceiver, an electronic notepad, a calculator, a memory card, a portable recorder, a radio, a standby power source, a motor, an automobile, a motorcycle, a power-assisted bicycle, a bicycle, a lighting apparatus, a toy, a game console, a clock, an electric tool, a flash lamp, a camera, a large household battery, and a lithium-ion capacitor.

A preparation process of the electrochemical apparatus is common sense for persons skilled in the art, and is not particularly limited in this application. For example, the electrochemical apparatus may be manufactured in the following process: a positive electrode and a negative electrode are stacked with a separator therebetween, and are put into a housing after operations such as winding and folding as needed. The housing is injected with an electrolyte and then sealed. The separator used is the foregoing separator provided in this application. In addition, an overcurrent prevention element, a guide plate, and the like may be placed in the housing as needed, to prevent pressure increase, overcharge, and discharge in the electrochemical apparatus.

This application provides an electrochemical apparatus, including a positive electrode. The positive electrode includes a current collector, a first material layer, and a second material layer. The second material layer is disposed on at least one surface of the current collector, and the first material layer is disposed between the current collector and the second material layer. The first material layer includes a leveling agent. A difference between the maximum value and the minimum value of thickness of the first material layer is less than or equal to 3 µm. The obtained positive electrode has high uniformity in thickness, and there is strong adhesion between the current collector and the first material layer, and between the second material layer and the first material layer. The positive electrode is applied to the electrochemical apparatus or electronic apparatus, so that safety accidents caused by external forces such as impact or puncture can be effectively avoided, thereby improving the safety and reliability of the electrochemical apparatus or electronic apparatus.

### BRIEF DESCRIPTION OF DRAWINGS

To describe the technical solutions in this application and the prior art more clearly, the following briefly describes the accompanying drawings required for describing some embodiments and the prior art. Apparently, the accompanying drawings in the following description show merely some embodiments of this application.
FIG. 1 is a schematic structural diagram of a positive electrode plate according to an embodiment of this application;
FIG. 2 is a schematic structural diagram of a positive electrode plate according to another embodiment of this application;
FIG. 3 is a top view of a positive electrode plate according to an embodiment of this application;
FIG. 4 is a top view of a positive electrode plate according to another embodiment of this application; and
FIG. 5 is a top view of a positive electrode plate according to still another embodiment of this application.

### DETAILED DESCRIPTION

To make the objectives, technical solutions, and advantages of this application clearer, the following further details this application with reference to the accompanying drawings and embodiments. Apparently, the described embodiments are merely some but not all of the embodiments of this application.

It should be noted that in the specific embodiments of this application, an example in which a lithium-ion battery is used as an electrochemical apparatus is used to illustrate this application. However, the electrochemical apparatus in this application is not limited to the lithium-ion battery.

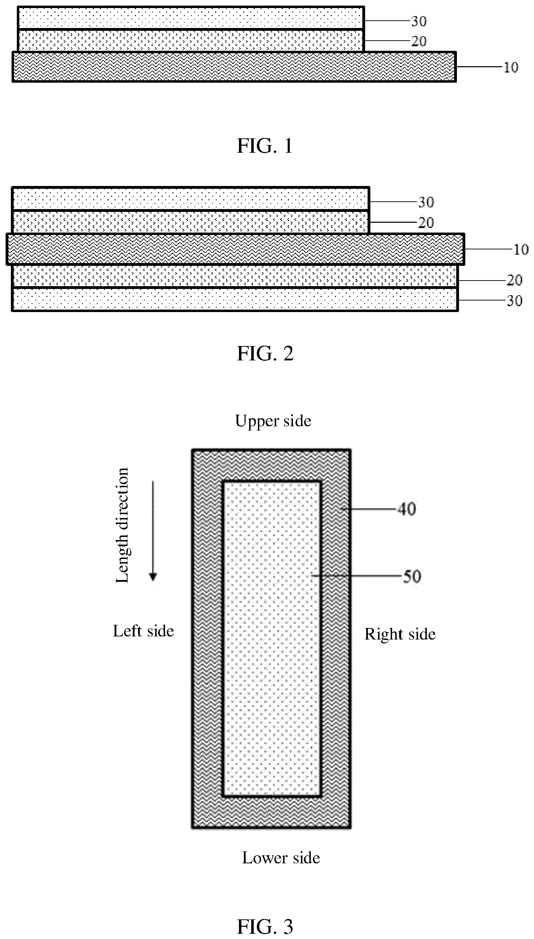

FIG. 1 is a schematic structural diagram of a positive electrode plate according to an embodiment of this application. A first material layer 20 and a second material layer 30 are disposed in sequence on a surface of a positive electrode current collector 10, and are applied on only one surface of the positive electrode current collector 10. Areas of coated regions of the first material layer 20 and the second material layer 30 are less than or equal to an area of the positive electrode current collector 10.

FIG. 2 is a schematic structural diagram of a positive electrode plate according to another embodiment of this application. The first material layer 20 and the second material layer 30 are disposed in sequence on the surface of the positive electrode current collector 10, and applied on the two surfaces of the positive electrode current collector 10.

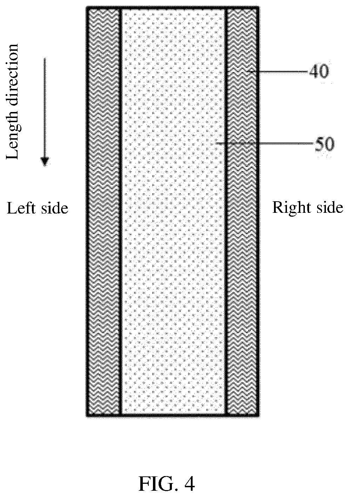

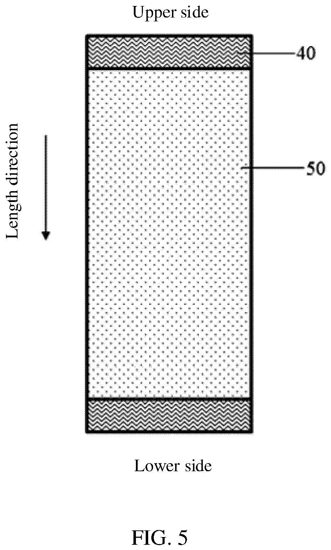

FIG. 3 to FIG. 5 are top views of positive electrode plates according to some embodiments of this application. A coated region 50 of the first material layer 20 and the second material layer 30 on the positive electrode current collector is less than or equal to a surface area of the positive electrode current collector. As shown in FIG. 3, an uncoated region 40 may surround the coated region 50, and widths of the uncoated region 40 on the upper, lower, left, and right sides may be the same or different. As shown in FIG. 4, the uncoated region 40 is located on two sides along a length direction of the current collector, and the widths of the uncoated region 40 on the left and right sides may be the same or different. As shown in FIG. 5, the uncoated region 40 is located on two sides along a direction perpendicular to a length of the current collector, and the lengths of the uncoated region 40 on the upper side and the lower side may be the same or different.

The following further details some embodiments of this application by using examples and comparative examples. Various tests and evaluations were performed in the following methods. In addition, unless otherwise specified, "percentage" and "%" are based on weight.

Test method and device

### Thickness difference test for first material layer:

(1) The electrode plate coated with the first material layer was removed from a finished battery cell in an environment of (25±3)°C. A residual electrolyte was wiped off a surface of the electrode plate with dust-free paper.
(2) The electrode plate coated with the first material layer was cut by using plasma to obtain a cross section of the electrode plate.
(3) The cross section of the electrode plate obtained in (2) was observed by using an SEM, and a thickness of the first material layer on one surface was tested. A distance between adjacent test points ranged from 2 mm to 3 mm. At least 15 different points were tested, and an average value of thicknesses at all test points was recorded as the thickness of the first material layer.

### Weight-average molecular weight test:

The gel permeation chromatography (GPC) method was used to test the weight-average molecular weight of the leveling agent and the binder. In this application, the weight-average molecular weight means an average molecular weight based on mass statistics.

### Adhesion test:

A Gotech tensile machine was used to test the adhesion between the first material layer and the current collector by using the 90° angle method: the electrode plate provided with the first material layer in the finished lithium-ion battery was cut into a strip-shaped sample with a size of 20 mm×60 mm, where a width and a length of the sample could be adjusted according to an actual situation. The first material layer at one end of the sample was adhered to a steel plate by using a double-sided adhesive tape along a length direction of the sample, and an adhesive length was not less than 40 mm. Then the steel plate was fixed at a corresponding position of the Gotech tensile machine. The other end of the sample not adhered to the steel plate was pulled up, and the electrode plate sample was put into a clamping head by using a connecting part or the electrode plate sample was directly put into the clamping head. An included angle between the part of the sample that was pulled up and the steel plate was 90°. The clamping head pulled the electrode plate at a speed of 5 mm/min to separate the first material layer from the current collector, and finally an average value of the tension measured in a stable range was recorded as the adhesion between the first material layer and the current collector. As shown in FIG. 6, it was required that a ratio of a standard deviation of the adhesion data to an average value of the adhesion data in the above stable range should not exceed 10%.

### Test of Dᵥ99 of inorganic particle

A laser particle size analyzer was used to test Dᵥ99 of inorganic particles. Dᵥ99 indicates an inorganic particle size where the cumulative distribution by volume reaches 99% as counted from the small particle size side.

### Pass rate of nail penetration test:

The lithium-ion battery under test was charged to a voltage of 4.45 V (that is, full-charge voltage) at a constant current of 0.05C, and then charged to a current of 0.025C (cutoff current) at a constant voltage of 4.45 V, so that the lithium-ion battery reached a fully charged state. The appearance of the lithium-ion battery before the test was recorded. The battery was subjected to a nail penetration test in an environment of 25±3°C. A diameter of a steel nail was 4 mm, a penetration speed was 30 mm/s, and a nail penetration position was on a side of the lithium-ion battery. After the test was carried out for 3.5 min or a temperature of a surface of an electrode assembly dropped to 50°C, the test was stopped. With 10 lithium-ion batteries as one group, status of the lithium-ion batteries was observed during the test. That the lithium-ion batteries neither caught fire nor exploded was used as the criterion.

### Example 1

### (1) Preparation of binder

Distilled water was added into a reactor, and the reactor was started for stirring. After nitrogen was introduced for deoxidization for 2 h, the following monomers: acrylonitrile, sodium acrylate, and acrylamide were added to the reactor at a mass ratio of 45:45:10. The reactor was heated to 65°C in an inert atmosphere and maintained such temperature. Then 20% ammonium persulfate solution was added as an initiator to start a reaction. After 22 hours, the precipitate was taken out and lye was added to neutralize pH to 6.5. A mass ratio of the distilled water, the monomer and the initiator was 89.5:10:0.5. After the reaction, reaction products were filtered, washed, dried, crushed, and screened to obtain a binder.

### (2) Preparation of positive electrode plate

Lithium iron phosphate serving as the positive electrode active material, the binder obtained in step (1), nano-particle conductive carbon serving as the conductive agent, carbon nanotubes serving as the conductive agent, and the polyethoxy propoxy propylene hydrocarbon serving as the leveling agent were mixed at a mass ratio of 95.5:3:0.7:0.5:0.3, and then N-methylpyrrolidone (NMP) was added as the solvent to prepare a slurry stirred uniform with a solid content of 30%. The slurry was applied evenly to the positive electrode current collector aluminum foil with a thickness of 10 µm, and dried at 90°C to obtain the first material layer with a thickness of 5 µm. Dᵥ99 of the lithium iron phosphate was 4 µm. The weight-average molecular weight of the polyethoxy propoxy propylene hydrocarbon was 20,000.

Lithium cobaltate (LCO) serving as a positive electrode active material, polyvinylidene fluoride (PVDF) serving as a binder, conductive carbon black serving as a conductive agent, and carbon nanotubes serving as a conductive agent were mixed at a mass ratio of 97.7:1.3:0.5:0.5, and then N-methylpyrrolidone (NMP) was added as a solvent to prepare a slurry stirred uniform with a solid content of 75%. The slurry was applied evenly to the first material layer, and dried at 90°C to obtain the second material layer with a thickness of 85 µm.

The foregoing steps were repeated on the other surface of the positive electrode plate to obtain a positive electrode plate with two surfaces coated. After coating was completed, the positive electrode plate was cut into a sheet-shaped material with a size of 74 mm×867 mm and then welded with tabs for later use.

### (3) Preparation of negative electrode plate

Graphite serving as a negative electrode active material, a styrene-butadiene polymer, and sodium carboxymethyl cellulose were mixed at a mass ratio of 97.5:1.3:1.2, with deionized water added as a solvent, to prepare a slurry stirred uniform with a solid content of 70%. The slurry was uniformly applied on a negative electrode current collector copper foil with a thickness of 10 µm, dried at 110°C, and cold pressed to obtain the negative electrode plate with a single surface coated with a negative electrode active material layer, where the negative electrode active material layer was 150 µm in thickness.

The foregoing steps were repeated on the other surface of the negative electrode plate to obtain a negative electrode plate with two surfaces coated. After coating was completed, the negative electrode plate was cut into a sheet-shaped material with a size of 76 mm×851 mm and then welded with tabs for later use.

### (4) Preparation of electrolyte

In a dry argon atmosphere, organic solvents ethylene carbonate, ethyl methyl carbonate, and diethyl carbonate were mixed at a mass ratio of EC:EMC:DEC=30:50:20 to obtain an organic solution, and then a lithium salt lithium hexafluorophosphate was added to the organic solvents for dissolving and uniform mixing, to obtain an electrolyte with a lithium salt concentration of 1.15 mol/L.

### (5) Preparation of separator

Aluminum oxide and polyvinylidene fluoride were mixed at a mass ratio of 90:10, and dissolved into deionized water to form a ceramic slurry with a solid content of 50%. Then, the ceramic slurry was uniformly applied to one side of a porous substrate (polyethylene with a thickness of 7 µm, an average pore diameter of 0.073 µm, and 26% porosity) by using the micro gravure coating method, and then dried to obtain a double-layer structure of the ceramic coating and the porous substrate. A thickness of the ceramic coating was 50 µm.

The polyvinylidene fluoride (PVDF) and polyacrylate were mixed at a mass ratio of 96:4, and dissolved into deionized water to form a polymer slurry with a solid content of 50%. Then, the polymer slurry was uniformly applied to two surfaces of the double-layer structure of the ceramic coating and the porous substrate by using the micro gravure coating method, and then dried to obtain a separator. A thickness of one layer of the coating formed by the polymer slurry was 2 µm.

### (6) Preparation of lithium-ion battery

The positive electrode plate, the separator, and the negative electrode plate prepared above were stacked in order, so that the separator was sandwiched between the positive electrode plate and negative electrode plate for separation, and was wound to obtain an electrode assembly. The electrode assembly was put into an aluminum-plastic film packaging bag, and was dehydrated at 80°C, and the prepared electrolyte was injected. A lithium-ion battery was obtained after processes such as vacuum sealing, standing, formation, and shaping.

### Example 2

Example 2 was the same as Example 1 except that during the preparation of the positive electrode plate in step (2), the leveling agent was selected from polycarboxylic acid sodium, and a mass ratio of the lithium iron phosphate and the polycarboxylic acid sodium was 94.8:1.

### Example 3

Example 3 was the same as Example 1 except that during the preparation of the positive electrode plate in step (2), the leveling agent was selected from polysiloxane, and a mass ratio of the lithium iron phosphate and the polysiloxane was 95.6:0.2.

### Example 4

Example 4 was the same as Example 1 except that during the preparation of the positive electrode plate in step (2), the leveling agent was selected from methyl polyacrylate, and a mass ratio of the lithium iron phosphate and the methyl polyacrylate was 95.5:0.3.

### Example 5

Example 5 was the same as Example 1 except that during the preparation of the positive electrode plate in step (2), the leveling agent was selected from polypropylene alcohol, and a mass ratio of the lithium iron phosphate and the polypropylene alcohol was 96.8:2.

### Example 6

Example 6 was the same as Example 1 except that during the preparation of the positive electrode plate in step (2), the leveling agent was selected from polyethylene ether, and a mass ratio of the lithium iron phosphate and the polyethylene ether was 87.8:8.

### Example 7

Example 7 was the same as Example 1 except that during the preparation of the positive electrode plate in step (2), the mass ratio of the lithium iron phosphate and the polyethoxy propoxy propylene hydrocarbon was 95.79:0.01.

### Example 8

Example 8 was the same as Example 1 except that during the preparation of the positive electrode plate in step (2), the mass ratio of the lithium iron phosphate and the polyethoxy propoxy propylene hydrocarbon was 95.75:0.05.

### Example 9

Example 9 was the same as Example 1 except that during the preparation of the positive electrode plate in step (2), the mass ratio of the lithium iron phosphate and the polyethoxy propoxy propylene hydrocarbon was 95.7:0.1.

### Example 10

Example 10 was the same as Example 1 except that during the preparation of the positive electrode plate in step (2), the mass ratio of the lithium iron phosphate and the polyethoxy propoxy propylene hydrocarbon was 95.5:0.4.

### Example 11

Example 11 was the same as Example 1 except that during the preparation of the positive electrode plate in step (2), the mass ratio of the lithium iron phosphate and the polyethoxy propoxy propylene hydrocarbon was 95.3:0.5.

### Example 12

Example 12 was the same as Example 1 except that during the preparation of the positive electrode plate in step (2), the mass ratio of the lithium iron phosphate and the polyethoxy propoxy propylene hydrocarbon was 95:0.8.

### Example 13

Example 13 was the same as Example 2 except that during the preparation of the positive electrode plate in step (2), the mass ratio of the lithium iron phosphate and the polycarboxylic acid sodium was 92.8:3.

### Example 14

Example 14 was the same as Example 2 except that during the preparation of the positive electrode plate in step (2), the mass ratio of the lithium iron phosphate and the polycarboxylic acid sodium was 90.8:5.

### Example 15

Example 15 was the same as Example 2 except that during the preparation of the positive electrode plate in step (2), the mass ratio of the lithium iron phosphate and the polycarboxylic acid sodium was 87.8:8.

### Example 16

Example 16 was the same as Example 2 except that during the preparation of the positive electrode plate in step (2), the mass ratio of the lithium iron phosphate and the polycarboxylic acid sodium was 85.8:10.

### Example 17

Example 17 was the same as Example 1 except that during the preparation of the positive electrode plate in step (2), the weight-average molecular weight of the polyethoxy propoxy propylene hydrocarbon serving as the leveling agent was 5,000.

### Example 18

Example 18 was the same as Example 1 except that during the preparation of the positive electrode plate in step (2), the weight-average molecular weight of the polyethoxy propoxy propylene hydrocarbon serving as the leveling agent was 30,000.

### Example 19

Example 19 was the same as Example 1 except that during the preparation of the positive electrode plate in step (2), the weight-average molecular weight of the polyethoxy propoxy propylene hydrocarbon serving as the leveling agent was 50,000.

### Example 20

Example 20 was the same as Example 1 except that during the preparation of the positive electrode plate in step (2), the mass ratio of the lithium iron phosphate and the polyethoxy propoxy propylene hydrocarbon was 95.6:0.2.

### Example 21

Example 21 was the same as Example 20 except that during the preparation of the positive electrode plate in step (2), the positive electrode active material was selected from lithium iron manganese phosphate.

### Example 22

Example 22 was the same as Example 20 except that during the preparation of the positive electrode plate in step (2), the positive electrode active material was selected from lithium manganate oxide.

### Example 23

The Example 23 was the same as Example 1 except that the preparation of the positive electrode plate in step (2) was that: the lithium iron manganese phosphate, the binder obtained in step (1), the carbon nanotubes, and the polyethoxy propoxy propylene hydrocarbon were mixed at a mass ratio of 96.6:3:0.2:0.2, and then N-methylpyrrolidone (NMP) was added as a solvent to prepare a slurry stirred uniform with a solid content of 30%; and the slurry was applied evenly to the positive electrode current collector aluminum foil with a thickness of 10 µm, and dried at 90°C to obtain the first material layer with a thickness of 0.06 µm, and Dᵥ99 of the lithium iron phosphate was 0.02 µm.

### Example 24

Example 24 was the same as Example 23 except that during the preparation of the positive electrode plate in step (2), Dᵥ99 of the lithium iron phosphate was 0.06 µm, and the thickness of the first material layer was 0.15 µm.

### Example 25

Example 25 was the same as Example 1 except that during the preparation of the positive electrode plate in step (2), the positive electrode active material was selected from lithium iron manganese phosphate; a mass ratio of the binder obtained in step (1), the lithium iron manganese phosphate, the nano-particle conductive carbon, the carbon nanotubes, and the polyethoxy propoxy propylene hydrocarbon was 96:3:0.3:0.5:0.2; the thickness of the first material layer was 2 µm; and Dᵥ99 of the lithium iron manganese phosphate was 0.5 µm.

### Example 26

Example 26 was the same as Example 25 except that during the preparation of the positive electrode plate in step (2), the thickness of the first material layer was 3 µm, and Dᵥ99 of the lithium iron manganese phosphate was 1 µm.

### Example 27

Example 27 was the same as Example 21 except that during the preparation of the positive electrode plate in step (2), the thickness of the first material layer was 5 µm, and Dᵥ99 of the lithium iron manganese phosphate was 3 µm.

### Example 28

Example 28 was the same as Example 21 except that during the preparation of the positive electrode plate in step (2), the thickness of the first material layer was 9 µm, and Dᵥ99 of the lithium iron manganese phosphate was 7 µm.

### Example 29

Example 29 was the same as Example 21 except that during the preparation of the positive electrode plate in step (2), the thickness of the first material layer was 13 µm, and Dᵥ99 of the lithium iron manganese phosphate was 11 µm.

### Example 30

Example 30 was the same as Example 21 except that during the preparation of the positive electrode plate in step (2), the thickness of the first material layer was 17 µm, and Dᵥ99 of the lithium iron manganese phosphate was 15 µm.

### Example 31

Example 31 was the same as Example 21 except that during the preparation of the positive electrode plate in step (2), the thickness of the first material layer was 19.5 µm, and Dᵥ99 of the lithium iron manganese phosphate was 18 µm.

### Example 32

Example 32 was the same as Example 21 except that during the preparation of the positive electrode plate in step (2), the thickness of the first material layer was 20 µm, and Dᵥ99 of the lithium iron manganese phosphate was 19.9 µm.

### Example 33

Example 33 was the same as Example 21 except that during the preparation of the positive electrode plate in step (2), the conductive agent was selected from graphene.

### Example 34

Example 34 was the same as Example 21 except that during the preparation of the positive electrode plate in step (2), the conductive agent was selected from reticular graphite fiber.

### Example 35

Example 35 was the same as Example 21 except that during the preparation of the positive electrode plate in step (2), the conductive agent was selected from Ketjen black.

### Example 36

Example 36 was the same as Example 21 except that during the preparation of the positive electrode plate in step (2), the conductive agent was selected from graphite fiber.

### Example 37

Example 37 was the same as Example 21 except that during the preparation of the positive electrode plate in step (2), the carbon nanotubes were replaced with the reticular graphite fiber.

### Example 38

Example 38 was the same as Example 21 except that during the preparation of the positive electrode plate in step (2), the conductive agent was selected from the reticular graphite fiber, and a mass ratio of the lithium iron manganese phosphate, the binder obtained in step (1), the reticular graphite fiber, the polyethoxy propoxy propylene hydrocarbon was 98.7:1:0.1:0.2.

### Example 39

Example 39 was the same as Example 21 except that during the preparation of the positive electrode plate in step (2), the conductive agent was selected from the carbon nanotubes, and a mass ratio of the lithium iron manganese phosphate, the binder obtained in step (1), the carbon nanotubes, the polyethoxy propoxy propylene hydrocarbon was 98.3:1:0.5:0.2.

### Example 40

Example 40 was the same as Example 21 except that during the preparation of the positive electrode plate in step (2), the mass ratio of the lithium iron manganese phosphate, nano-particle conductive carbon, and the carbon nanotubes was 96.2:0.1:0.5.

### Example 41

Example 41 was the same as Example 21 except that during the preparation of the positive electrode plate in step (2), the mass ratio of the lithium iron manganese phosphate, nano-particle conductive carbon, and the carbon nanotubes was 96:0.3:0.5.

### Example 42

Example 42 was the same as Example 21 except that during the preparation of the positive electrode plate in step (2), the mass ratio of the lithium iron manganese phosphate, nano-particle conductive carbon, and the carbon nanotubes was 95.4:0.9:0.5.

### Example 43

Example 43 was the same as Example 21 except that during the preparation of the positive electrode plate in step (2), the mass ratio of the lithium iron manganese phosphate, nano-particle conductive carbon, and the carbon nanotubes was 95.2:1.1:0.5.

### Example 44

Example 44 was the same as Example 21 except that during the preparation of the positive electrode plate in step (2), the mass ratio of the lithium iron manganese phosphate, nano-particle conductive carbon, and the carbon nanotubes was 95:1.3:0.5.

### Example 45

Example 45 was the same as Example 21 except that during the preparation of the positive electrode plate in step (2), the mass ratio of the lithium iron manganese phosphate, nano-particle conductive carbon, and the carbon nanotubes was 94.8:1.5:0.5.

### Example 46

Example 46 was the same as Example 21 except that during the preparation of the positive electrode plate in step (2), the mass ratio of the lithium iron manganese phosphate, nano-particle conductive carbon, and the carbon nanotubes was 96:0.5:0.3.

### Example 47

Example 47 was the same as Example 21 except that during the preparation of the positive electrode plate in step (2), the mass ratio of the lithium iron manganese phosphate, nano-particle conductive carbon, and the carbon nanotubes was 95.8:0.5:0.5.

### Example 48

Example 48 was the same as Example 21 except that during the preparation of the positive electrode plate in step (2), the mass ratio of the lithium iron manganese phosphate, nano-particle conductive carbon, and the carbon nanotubes was 95.6:0.5:0.7.

### Example 49

Example 49 was the same as Example 21 except that during the preparation of the positive electrode plate in step (2), the mass ratio of the lithium iron manganese phosphate, nano-particle conductive carbon, and the carbon nanotubes was 95.4:0.5:0.9.

### Example 50

Example 50 was the same as Example 21 except that during the preparation of the positive electrode plate in step (2), the mass ratio of the lithium iron manganese phosphate, nano-particle conductive carbon, and the carbon nanotubes was 5.2:0.5:1.1.

### Example 51

Example 51 was the same as Example 21 except that during the preparation of the positive electrode plate in step (2), the carbon nanotubes were removed, and a mass ratio of the lithium iron manganese phosphate and nano-particle conductive carbon was 95.3:1.5.

### Example 52

Example 52 was the same as Example 51 except that during the preparation of the positive electrode plate in step (2), the mass ratio of the lithium iron manganese phosphate and the nano-particle conductive carbon was 94.8:2.

### Example 53

Example 53 was the same as Example 51 except that during the preparation of the positive electrode plate in step (2), the mass ratio of the lithium iron manganese phosphate, the nano-particle conductive carbon, and the binder was 86.8:5:8.

### Example 54

Example 54 was the same as Example 51 except that during the preparation of the positive electrode plate in step (2), the mass ratio of the lithium iron manganese phosphate, the nano-particle conductive carbon, and the binder was 79.8:10:10.

### Example 55

Example 55 was the same as Example 51 except that during the preparation of the positive electrode plate in step (2), the mass ratio of the lithium iron manganese phosphate, the nano-particle conductive carbon, and the binder was 71.8:15:13.

### Example 56

Example 56 was the same as Example 21 except that during the preparation of the positive electrode plate in step (2), a mass ratio of the lithium iron manganese phosphate, the nano-particle conductive carbon, the carbon nanotubes, and the binder was 59.8:15:5:20.

### Example 57

Example 57 was the same as Example 21 except that during the preparation of the binder in step (1), the binder was selected from sodium polyacrylate.

### Example 58

Example 58 was the same as Example 21 except that during the preparation of the binder in step (1), the binder was selected from polyacrylamide.

### Example 59

Example 59 was the same as Example 21 except that during the preparation of the binder in step (1), the mass ratio of the acrylonitrile, the sodium acrylate, and the acrylamide was 30:60:10.

### Example 60

Example 60 was the same as Example 21 except that during the preparation of the binder in step (1), the mass ratio of the acrylonitrile, the sodium acrylate, and the acrylamide was 30:10:60.

### Example 61

Example 61 was the same as Example 21 except that during the preparation of the binder in step (1), the mass ratio of the acrylonitrile, the sodium acrylate, and the acrylamide was 55:35:10.

### Example 62

Example 62 was the same as Example 21 except that during the preparation of the binder in step (1), the mass ratio of the acrylonitrile, the sodium acrylate, and the acrylamide was 55:10:35.

### Example 63

Example 63 was the same as Example 21 except that during the preparation of the binder in step (1), the mass ratio of the acrylonitrile, the sodium acrylate, and the acrylamide was 70:20:10.

### Example 64

Example 64 was the same as Example 18 except that during the preparation of the binder in step (1), the following monomers: the acrylonitrile, the sodium acrylate, the acrylamide, and acrylate were added to the reactor at a mass ratio of 42:45:10:3 to prepare the binder.

### Example 65

Example 65 was the same as Example 21 except that during the preparation of the positive electrode plate in step (2), the mass ratio of the lithium iron manganese phosphate and the binder obtained in step (1) was 97.6:1.

### Example 66

Example 66 was the same as Example 21 except that during the preparation of the positive electrode plate in step (2), the mass ratio of the lithium iron manganese phosphate and the binder obtained in step (1) was 96.6:2.

### Example 67

Example 67 was the same as Example 21 except that during the preparation of the positive electrode plate in step (2), the mass ratio of the lithium iron manganese phosphate and the binder obtained in step (1) was 94.6:4.

### Example 68

Example 68 was the same as Example 21 except that during the preparation of the positive electrode plate in step (2), the mass ratio of the lithium iron manganese phosphate and the binder obtained in step (1) was 93.6:5.

### Example 69

Example 69 was the same as Example 21 except that during the preparation of the positive electrode plate in step (2), the mass ratio of the lithium iron manganese phosphate and the binder obtained in step (1) was 90.6:8.

### Example 70

Example 70 was the same as Example 21 except that during the preparation of the positive electrode plate in step (2), the mass ratio of the lithium iron manganese phosphate and the binder obtained in step (1) was 88.6:10.

### Example 71

Example 71 was the same as Example 21 except that during the preparation of the positive electrode plate in step (2), the mass ratio of the lithium iron manganese phosphate and the binder obtained in step (1) was 86.6:12.

### Example 72

Example 72 was the same as Example 21 except that during the preparation of the positive electrode plate in step (2), the mass ratio of the lithium iron manganese phosphate and the binder obtained in step (1) was 83.6:15.

### Example 73

Example 73 was the same as Example 21 except that during the preparation of the positive electrode plate in step (2), the mass ratio of the lithium iron manganese phosphate and the binder obtained in step (1) was 80.6:18.

### Example 74

Example 74 was the same as Example 21 except that during the preparation of the positive electrode plate in step (2), the mass ratio of the lithium iron manganese phosphate and the binder obtained in step (1) was 78.6:20.

### Comparative Example 1

Comparative Example 1 was the same as Example 1 except that during the preparation of the positive electrode plate in step (2), the polyethoxy propoxy propylene hydrocarbon serving as the leveling agent was not included, a mass ratio of the lithium iron manganese phosphate, the binder obtained in step (1), the nano-particle conductive carbon, the carbon nanotubes was 95.8:3:0.7:0.5.

### Comparative Example 2

Comparative Example 2 was the same as Example 1 except that during the preparation of the positive electrode plate in step (2), the mass ratio of the lithium iron phosphate and the polyethoxy propoxy propylene hydrocarbon was 95.795:0.005.

### Comparative Example 3

Comparative Example 3 was the same as Example 1 except that during the preparation of the positive electrode plate in step (2), the leveling agent was selected from polypropylene alcohol, and a mass ratio of the lithium iron phosphate and the polypropylene alcohol was 80.8:15.

### Comparative Example 4

Comparative Example 4 was the same as Example 21 except that during the preparation of the positive electrode plate in step (2), the positive electrode active material was selected from lithium cobaltate.

### Comparative Example 5

Comparative Example 5 was the same as Example 21 except that during the preparation of the positive electrode plate in step (2), the positive electrode active material was selected from the lithium iron phosphate, and a mass ratio of the lithium iron phosphate and the nano-particle conductive carbon was 70.6:25.

### Comparative Example 6

Comparative Example 6 was the same as Example 21 except that during the preparation of the positive electrode plate in step (2), a mass ratio of the lithium iron phosphate and the binder obtained in step (1) was 75.6:23.

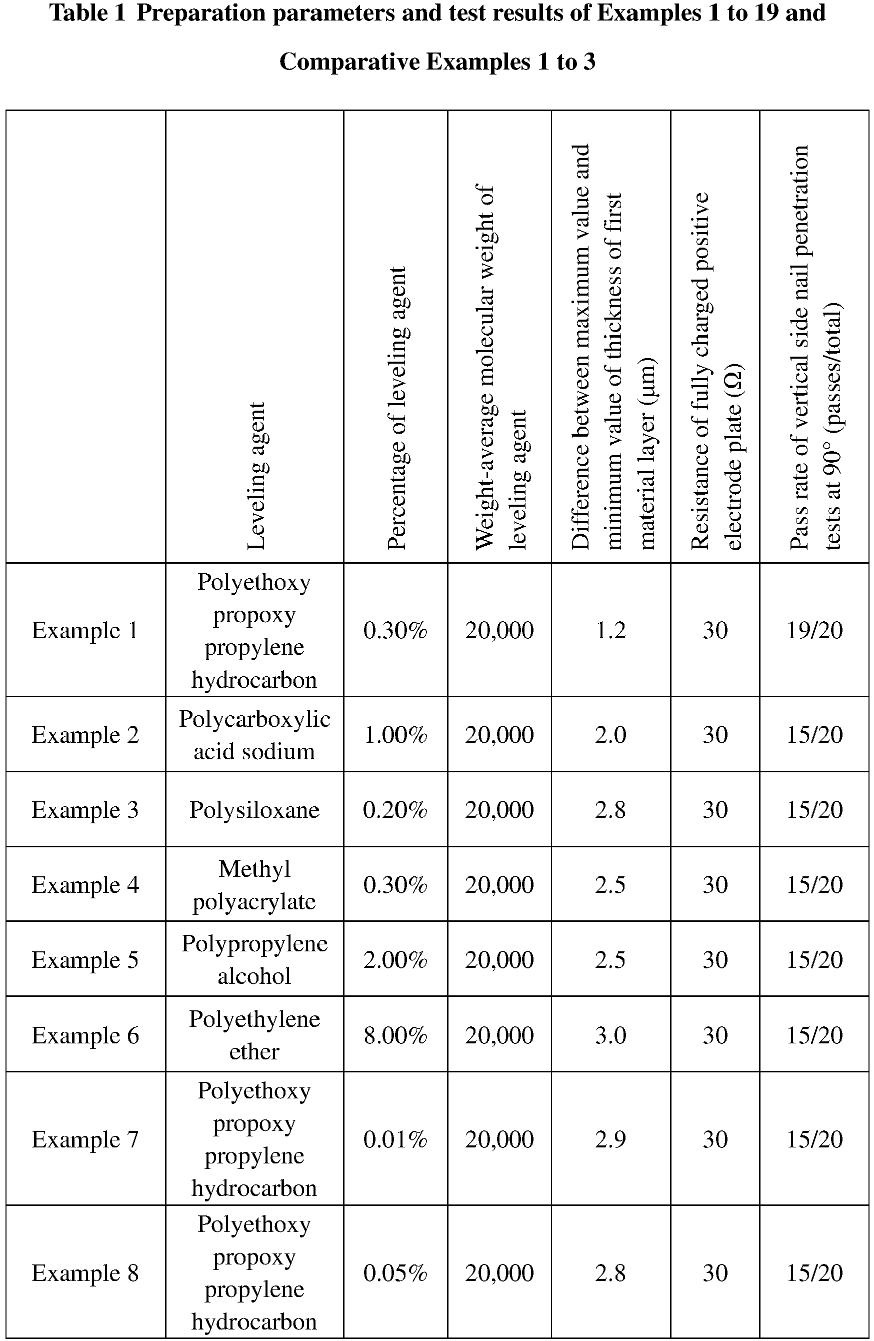

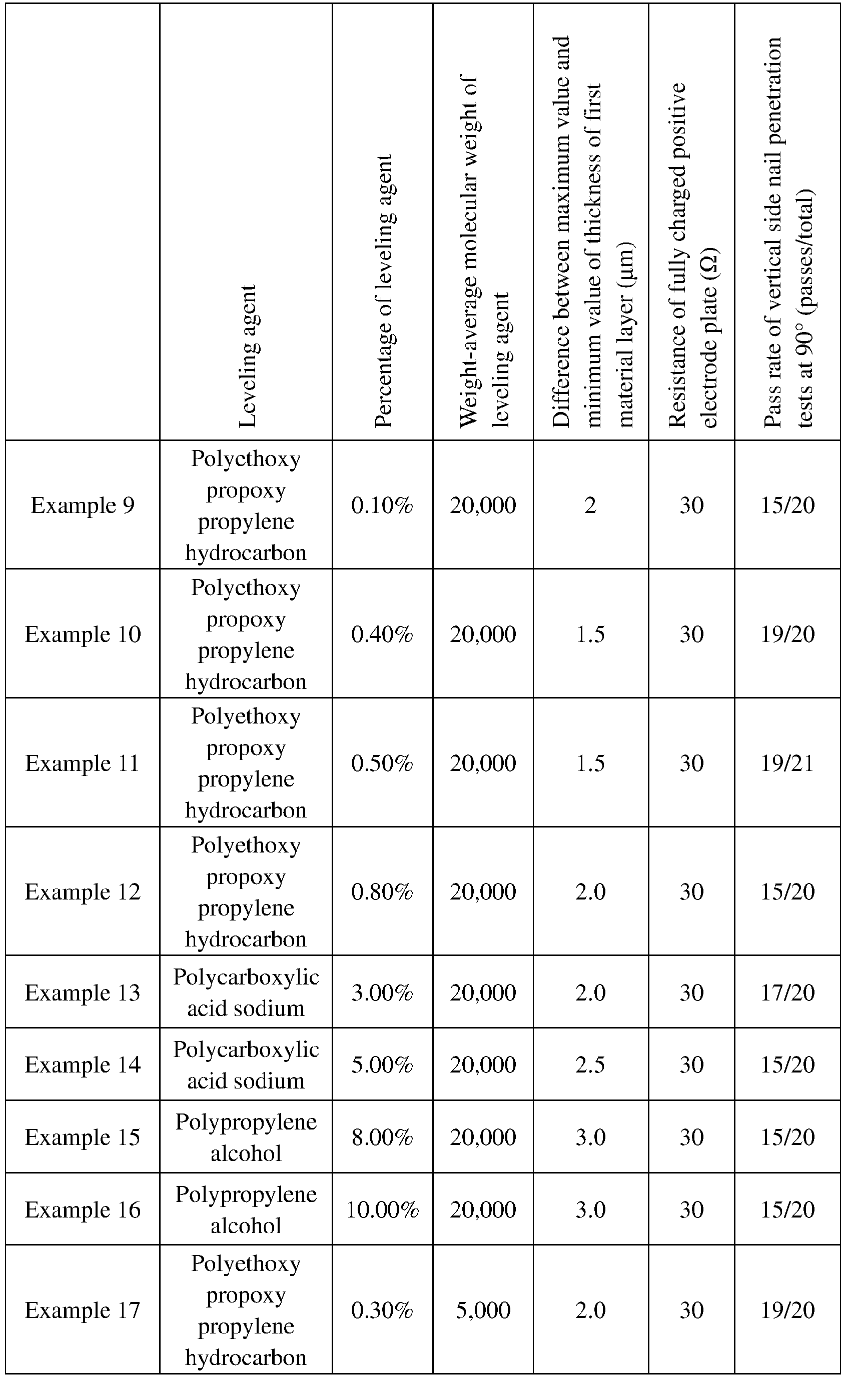

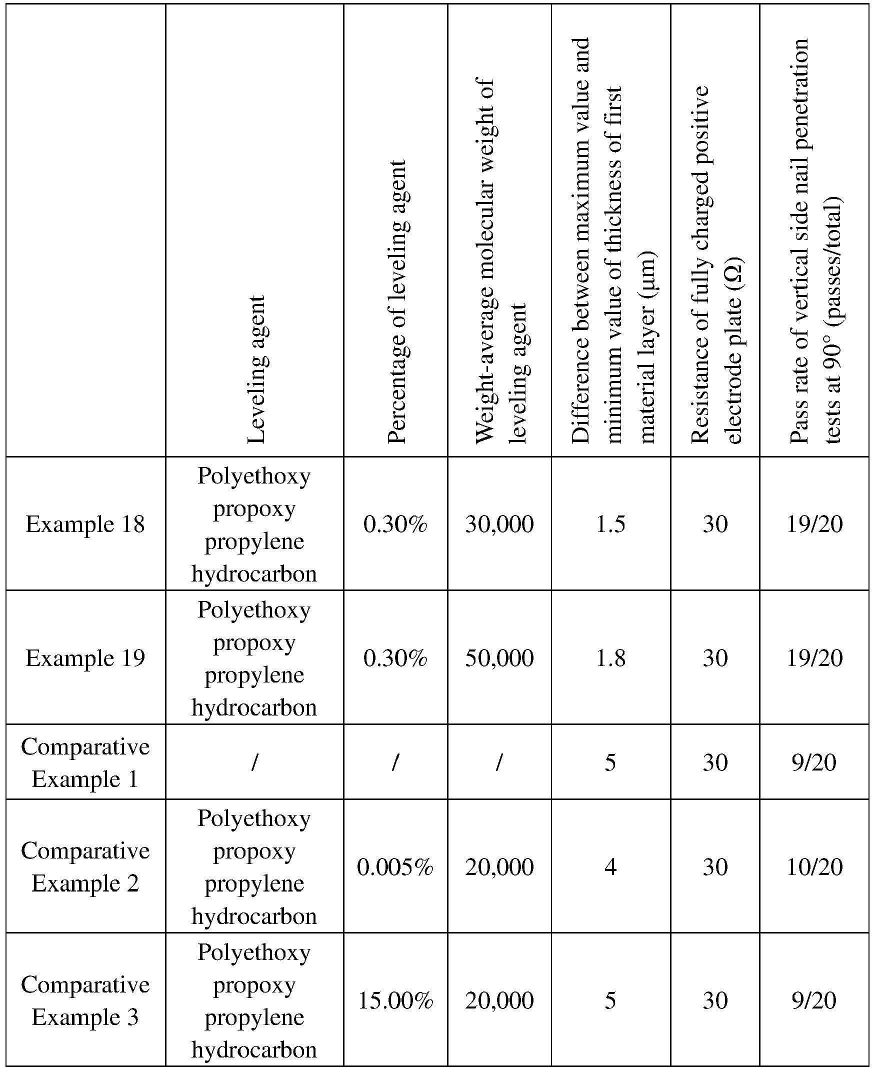

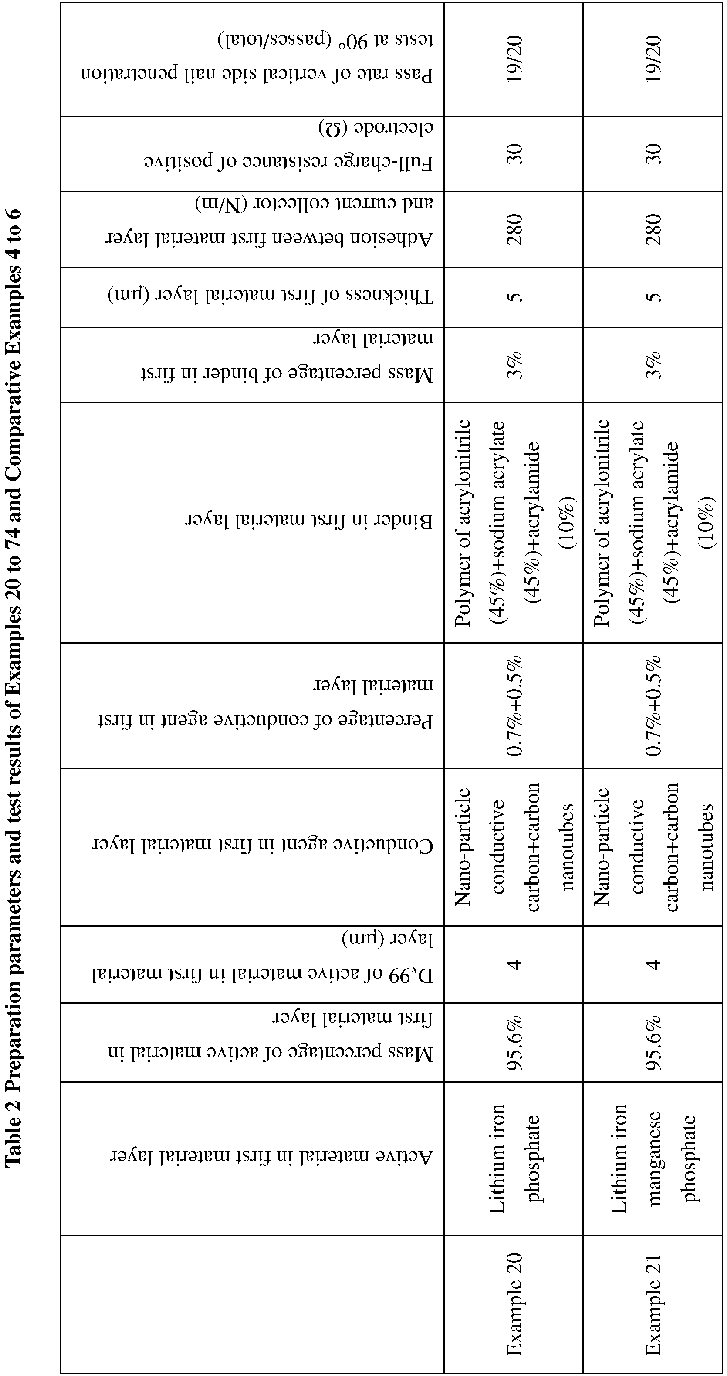

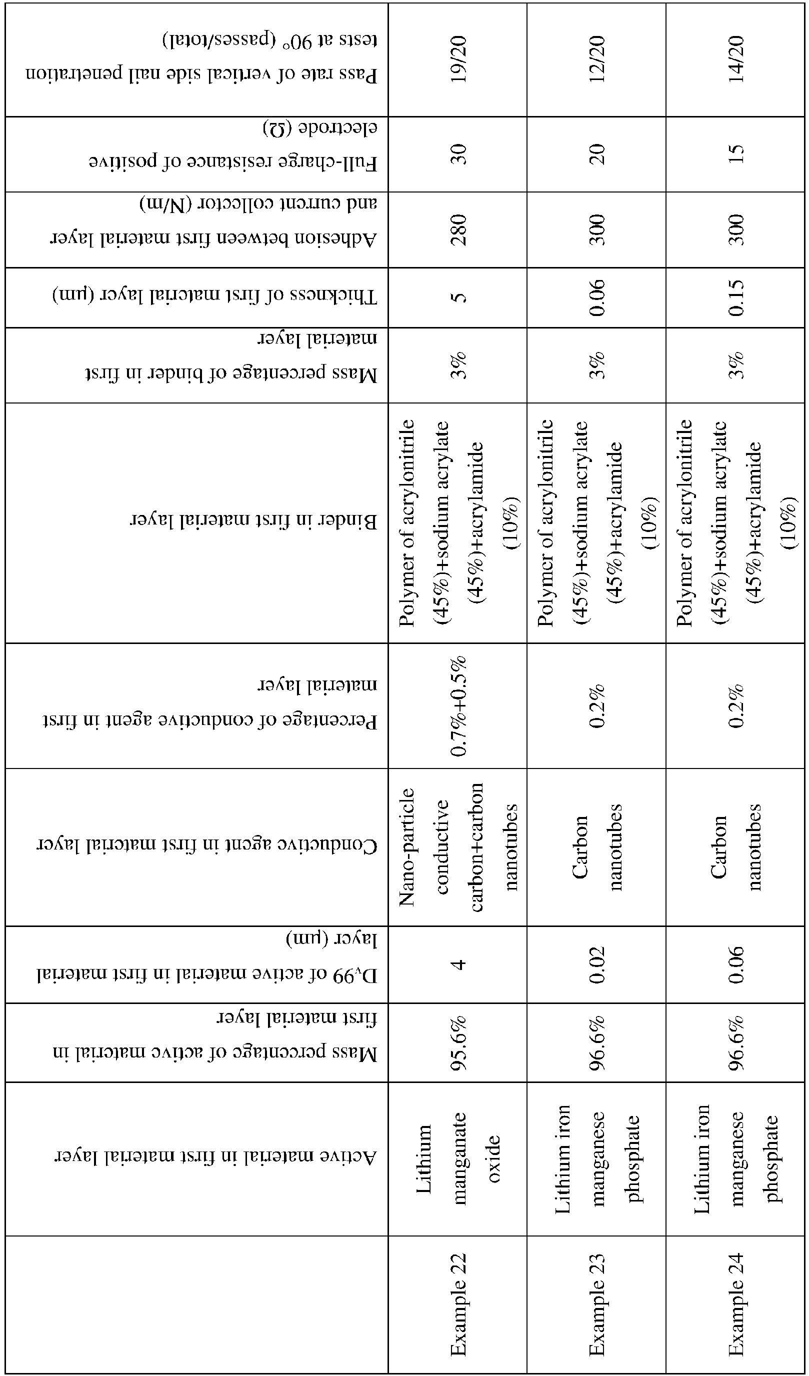

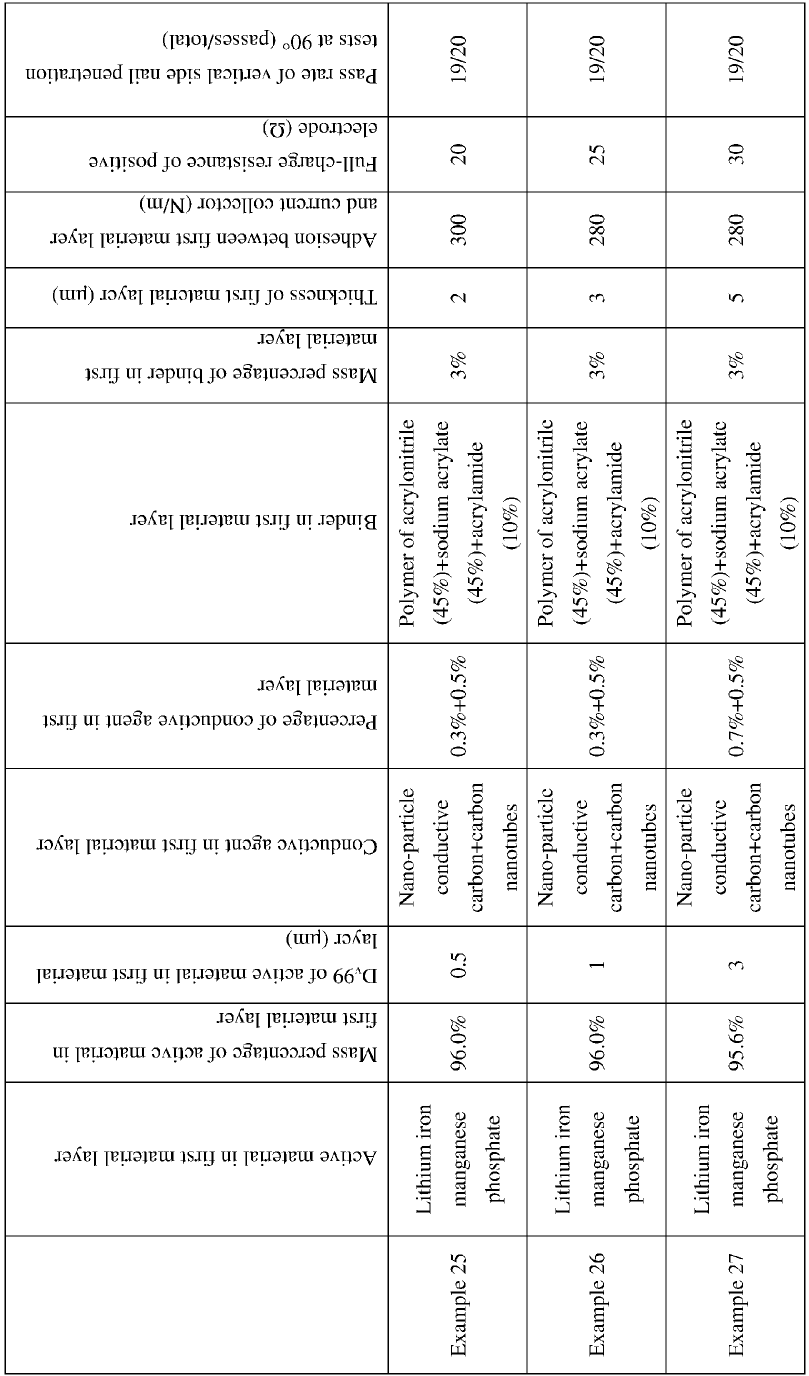

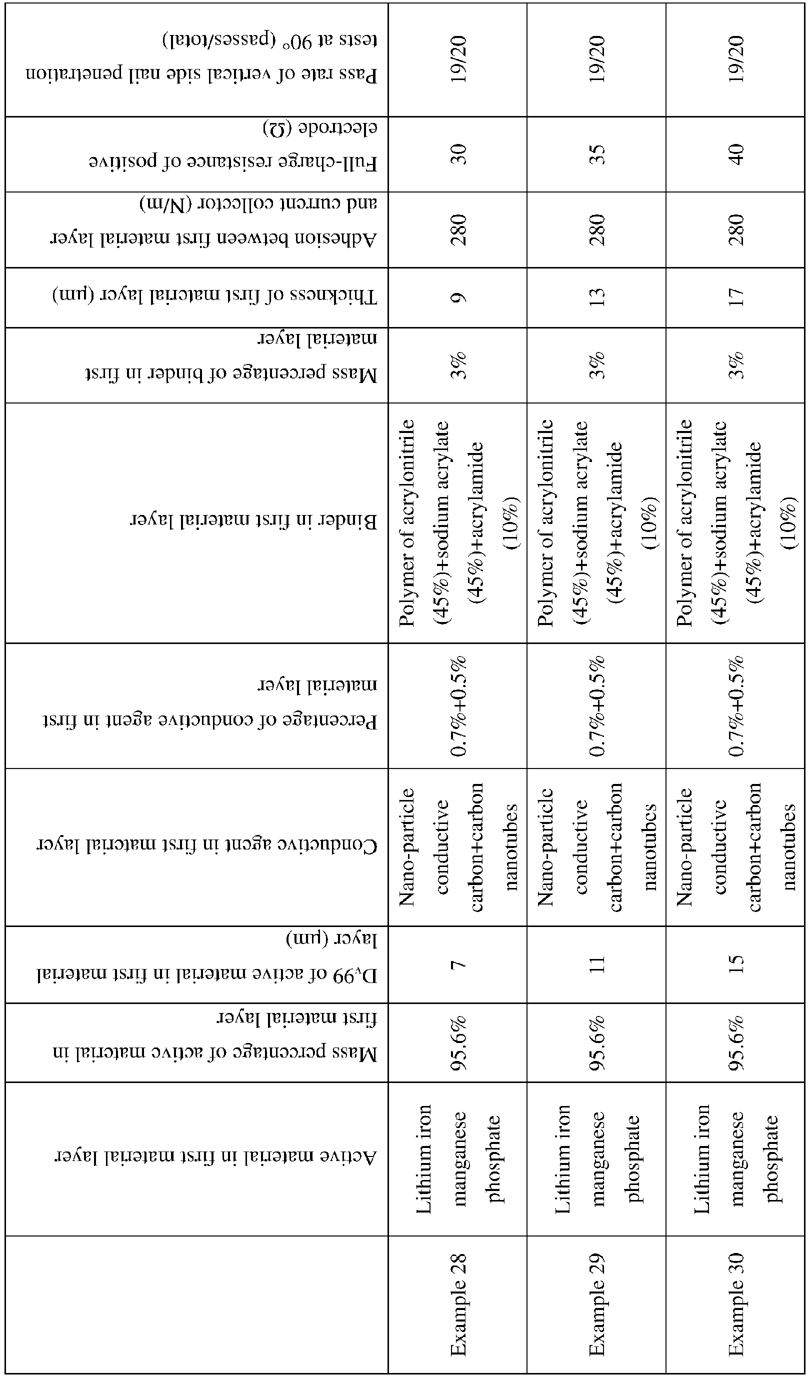

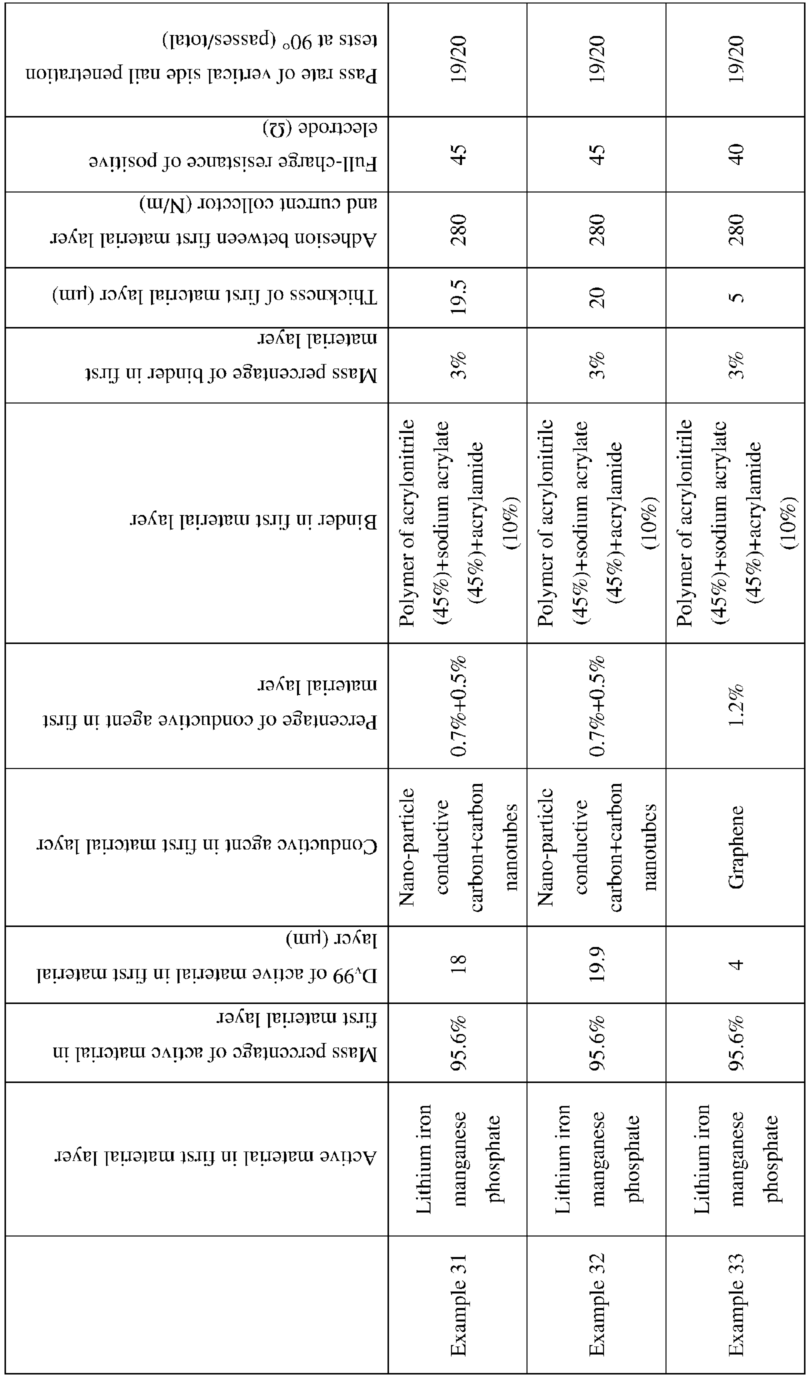

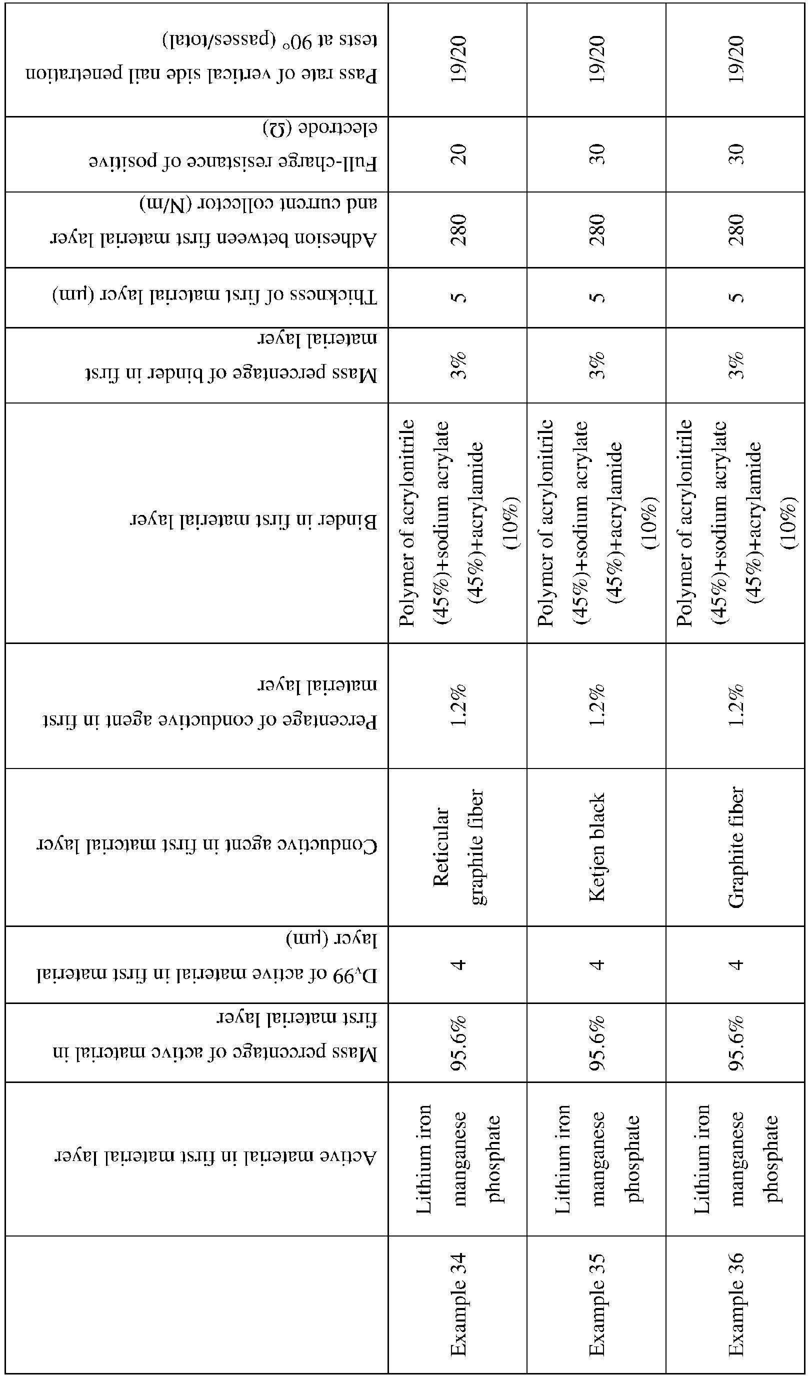

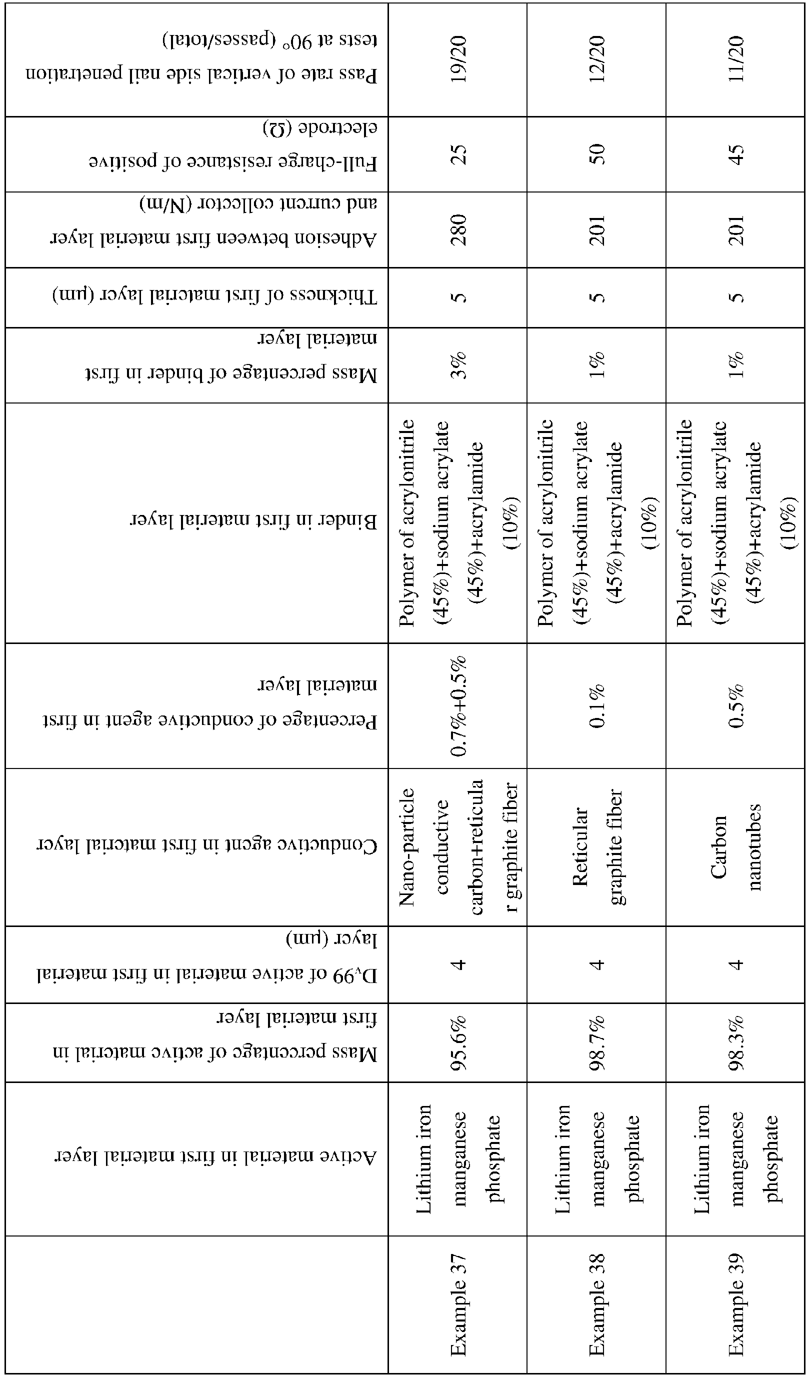

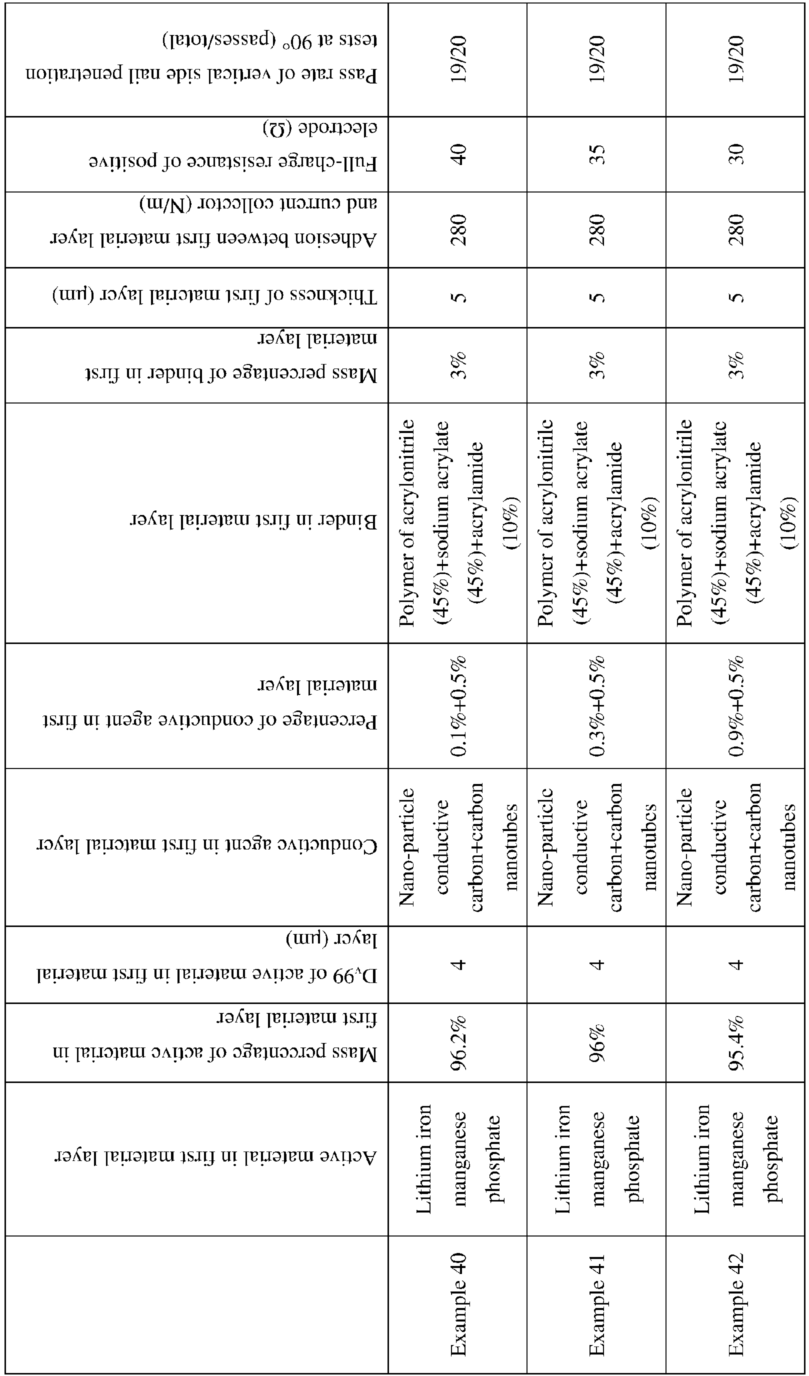

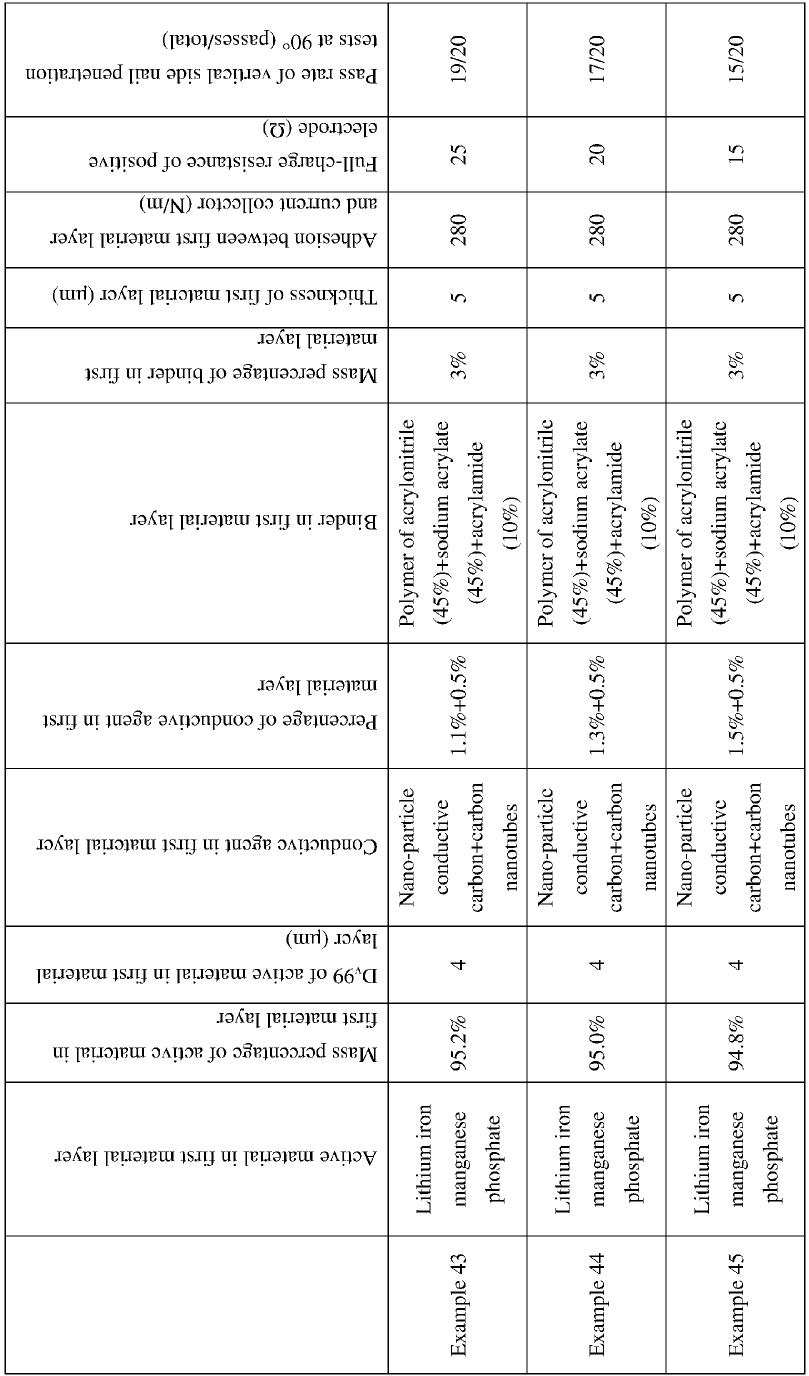

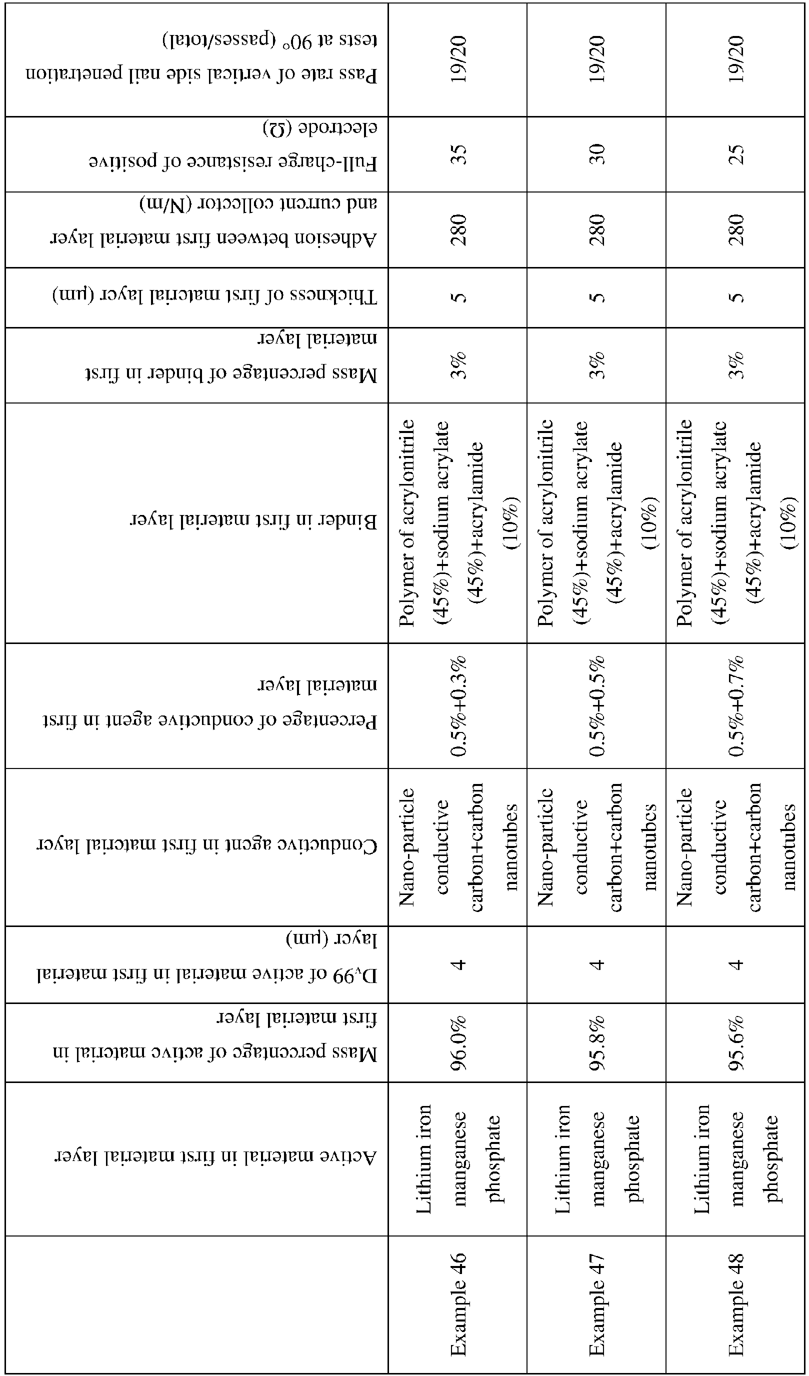

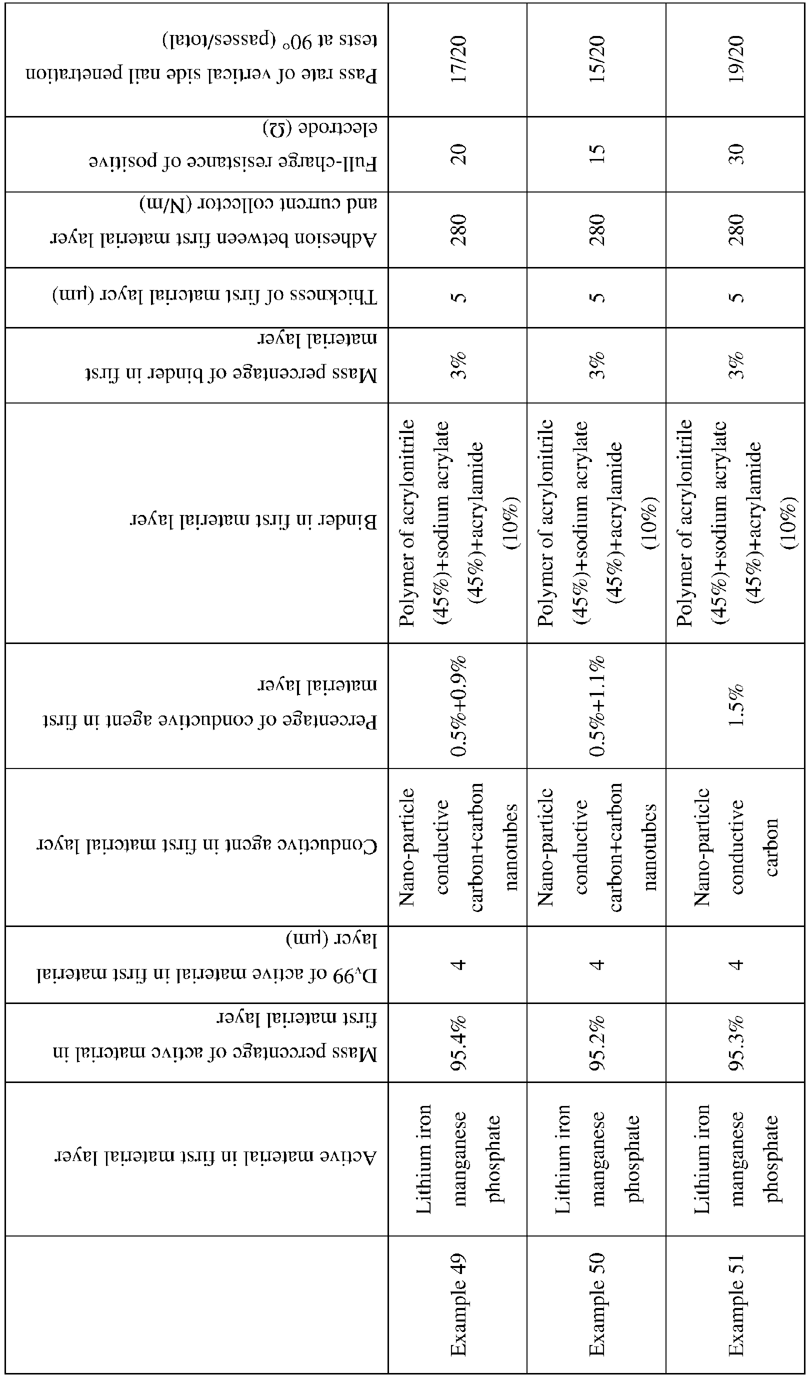

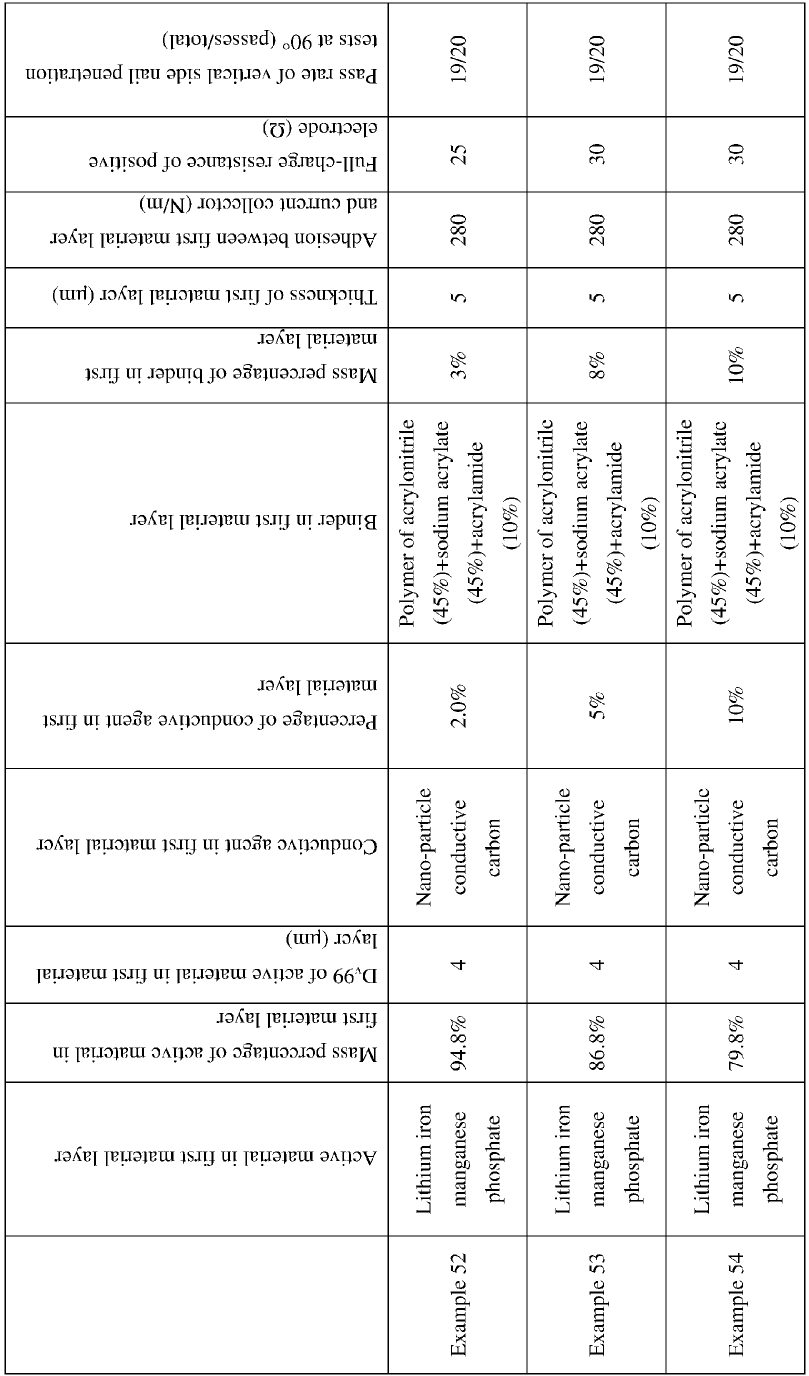

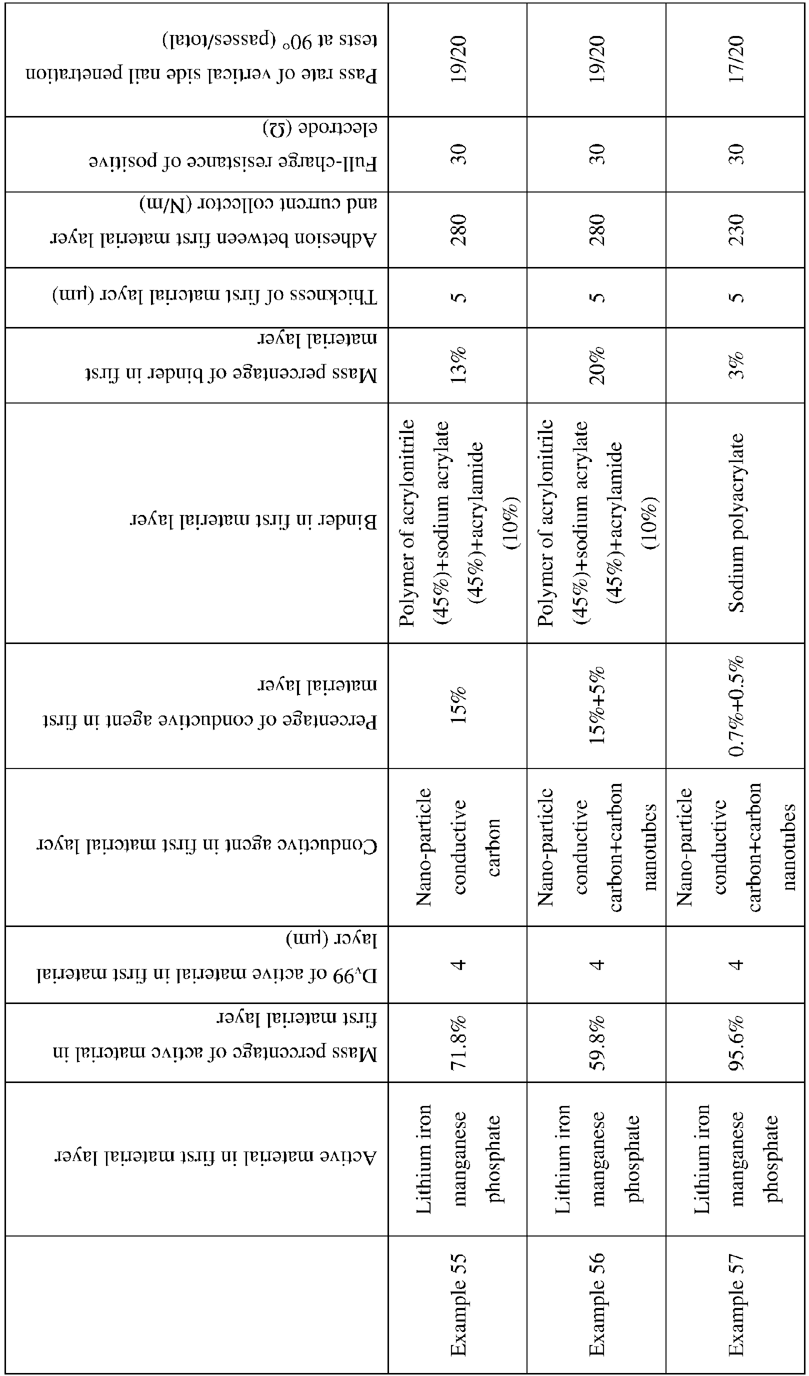

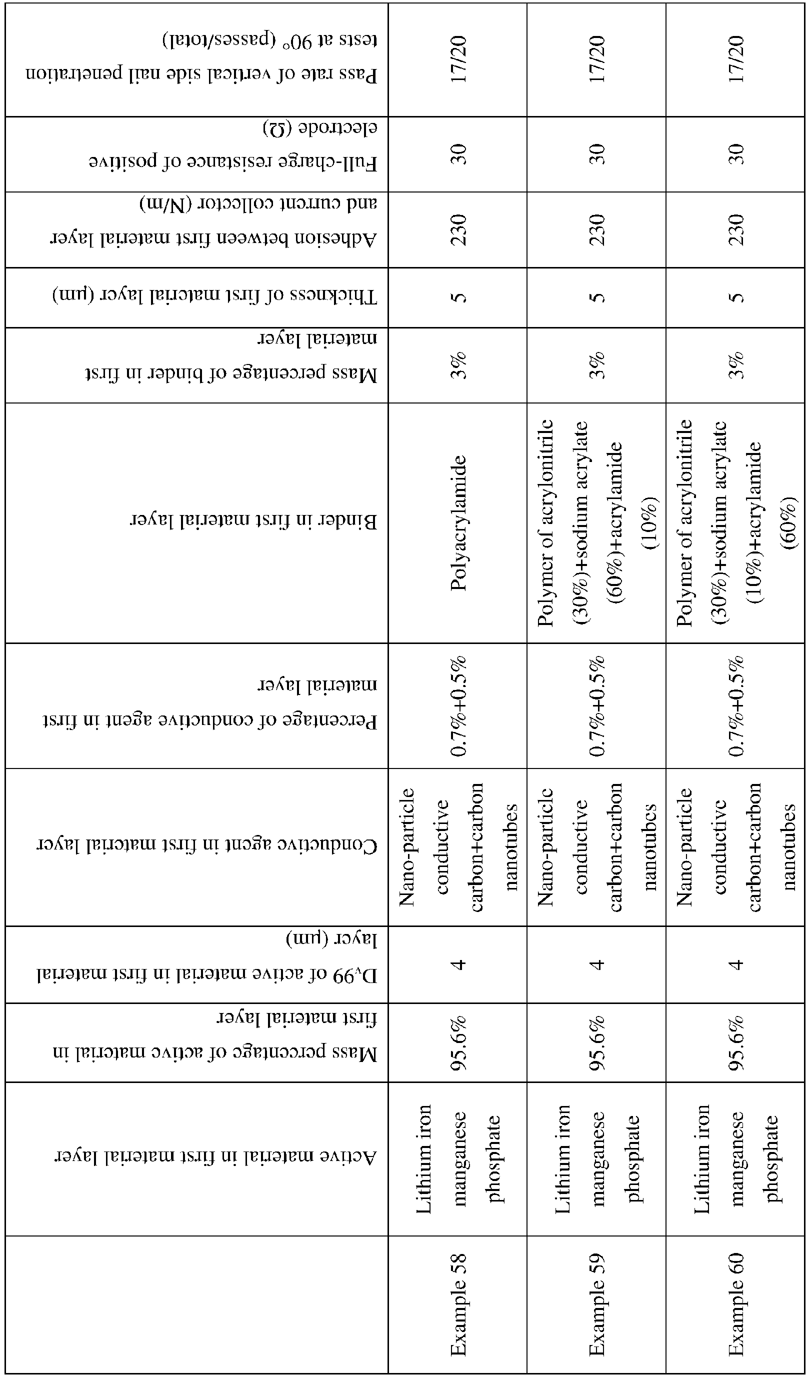

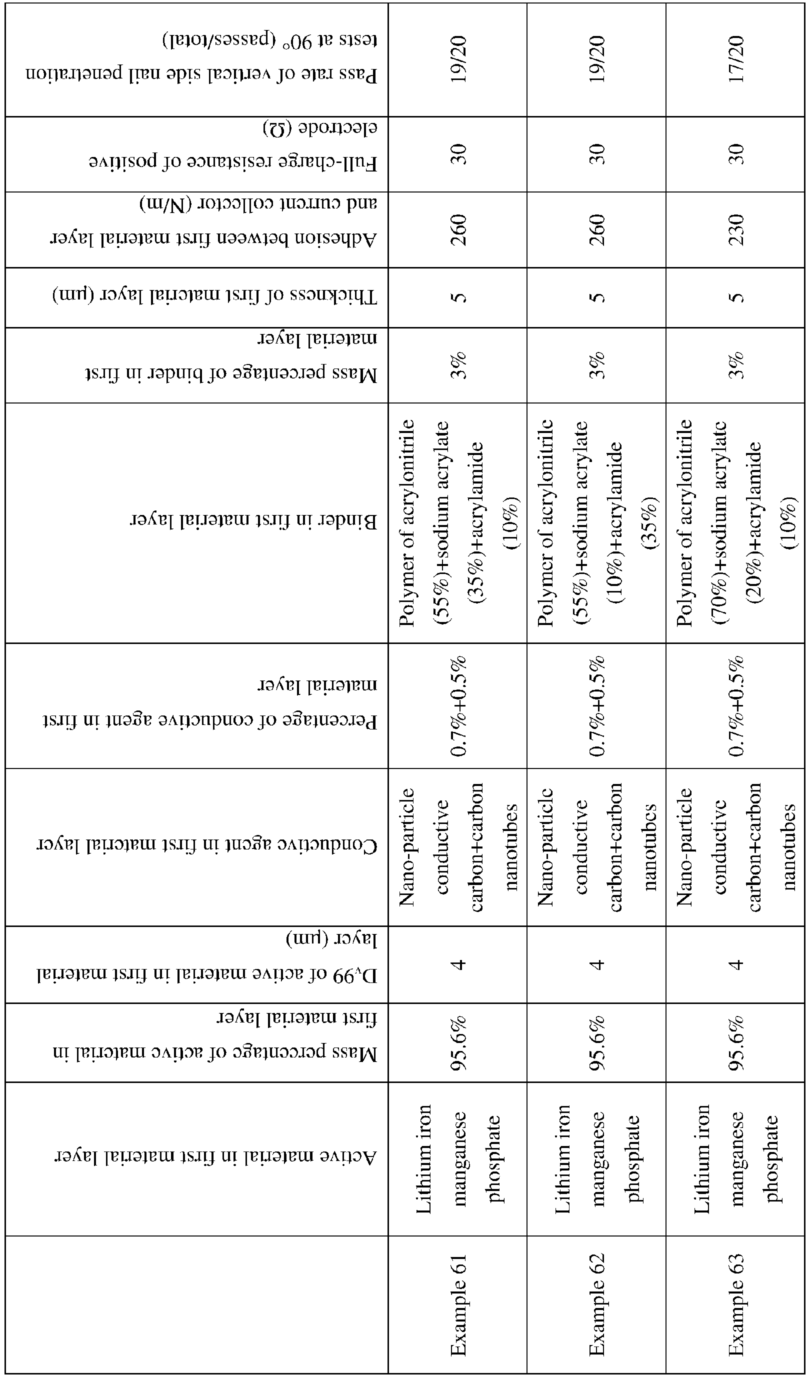

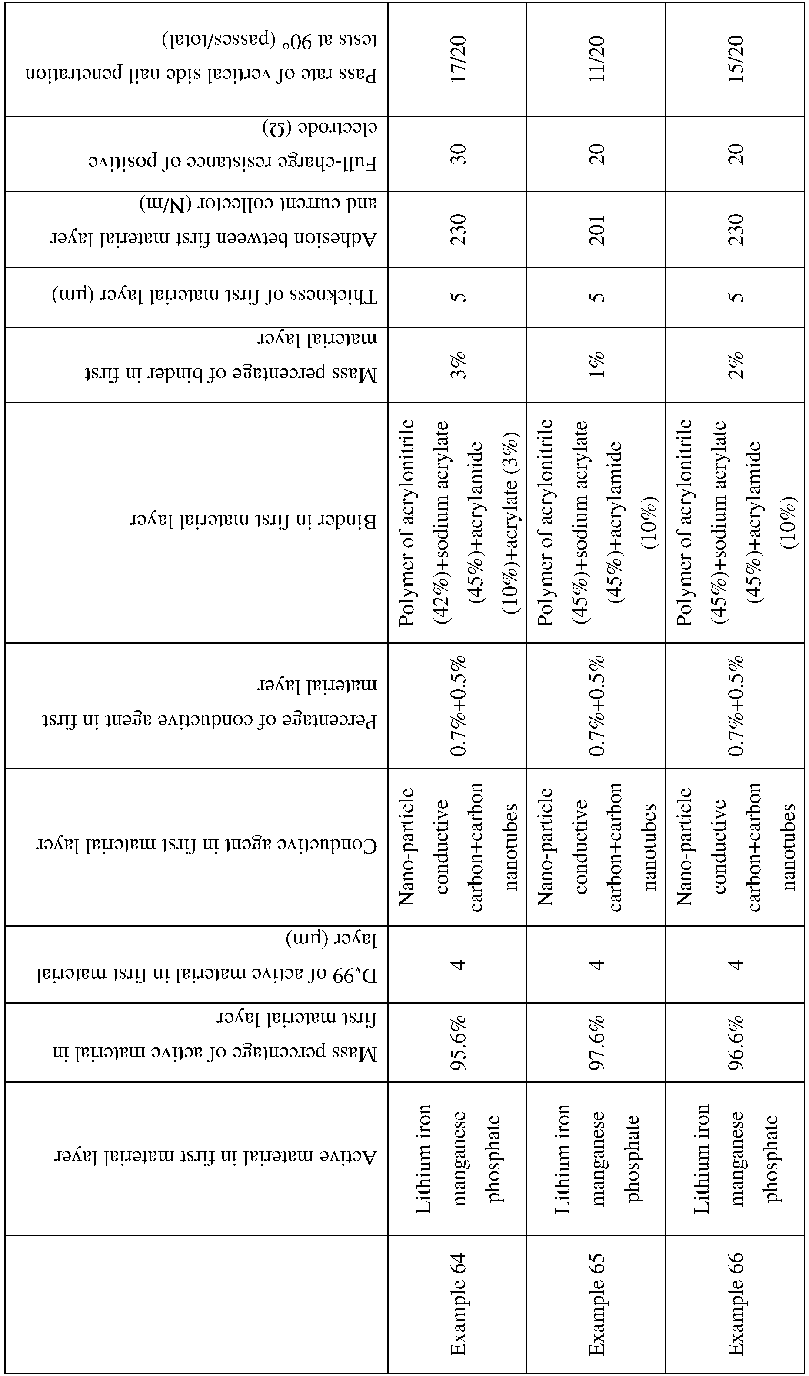

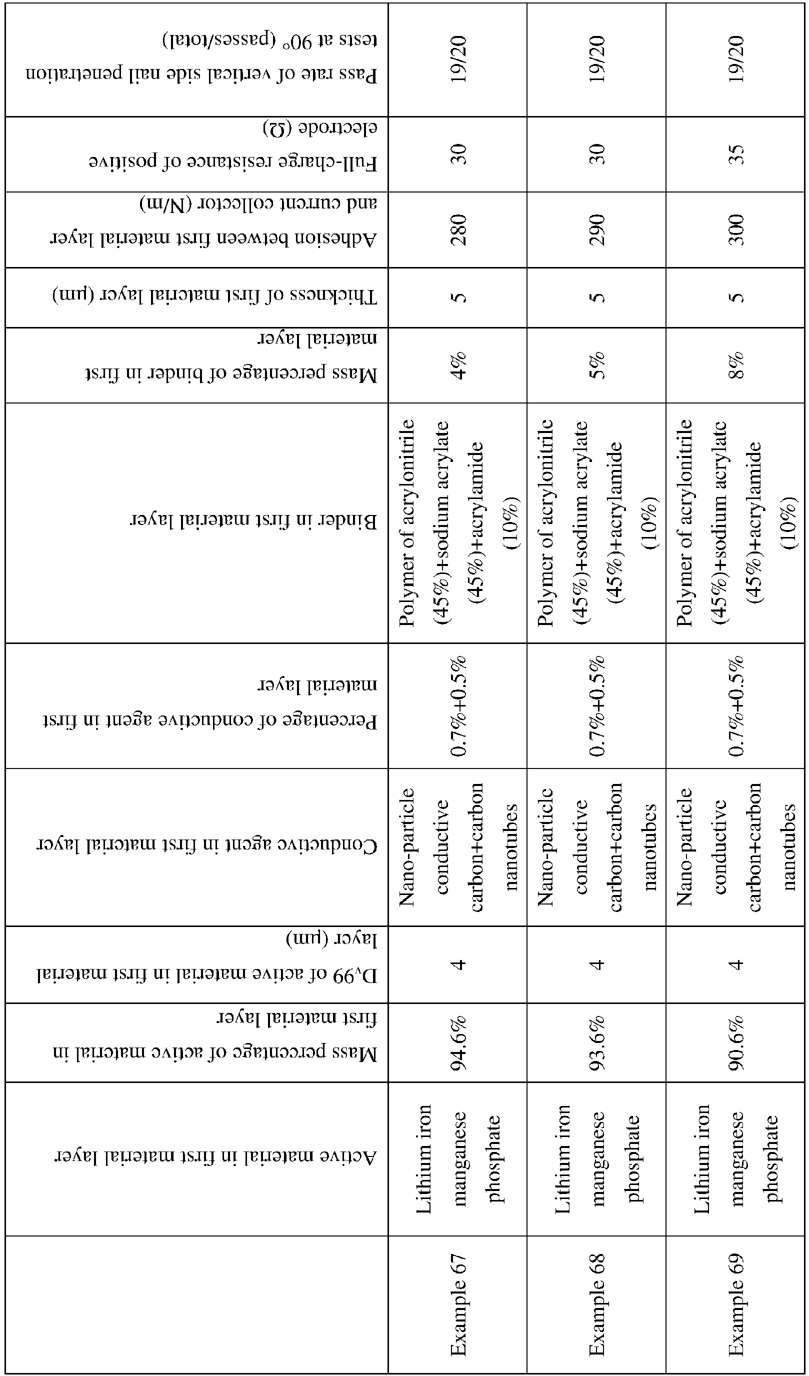

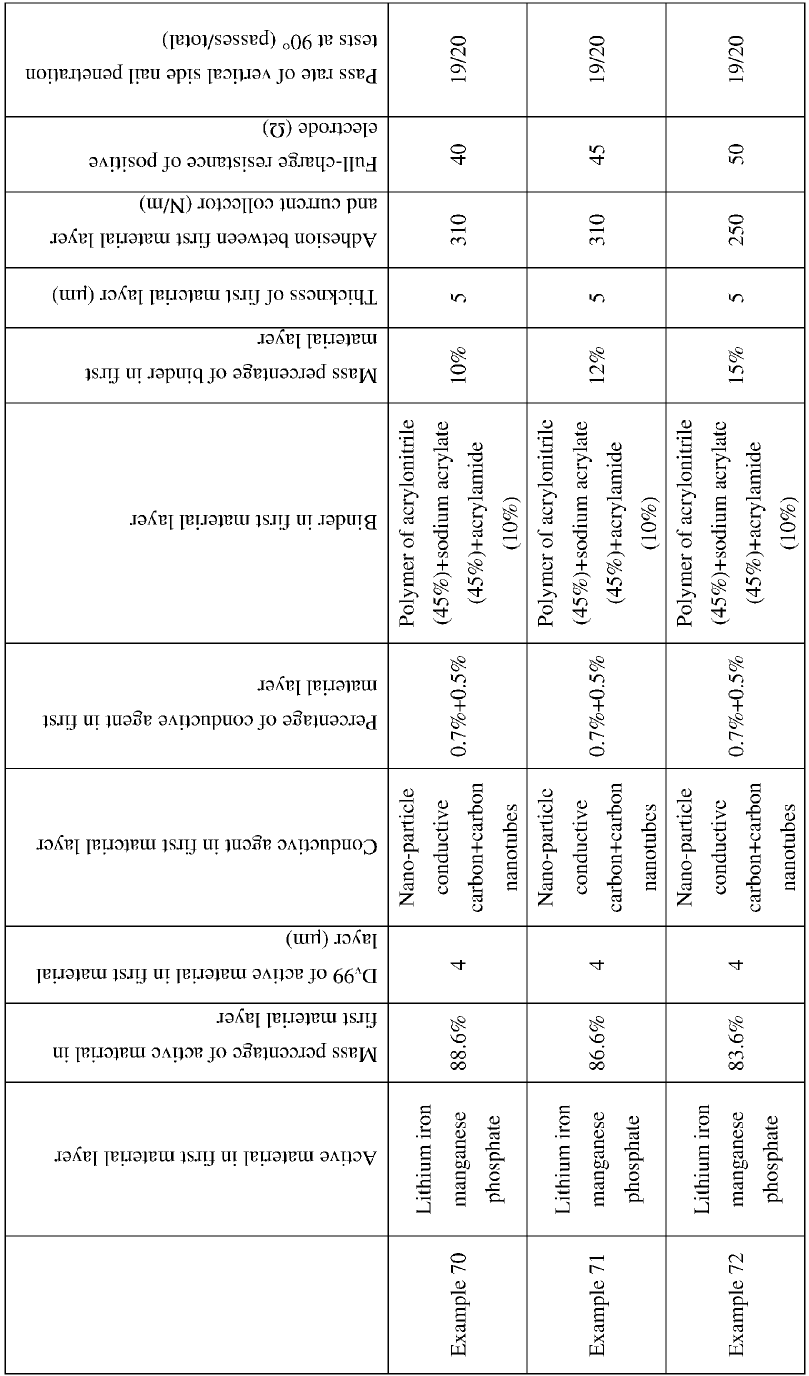

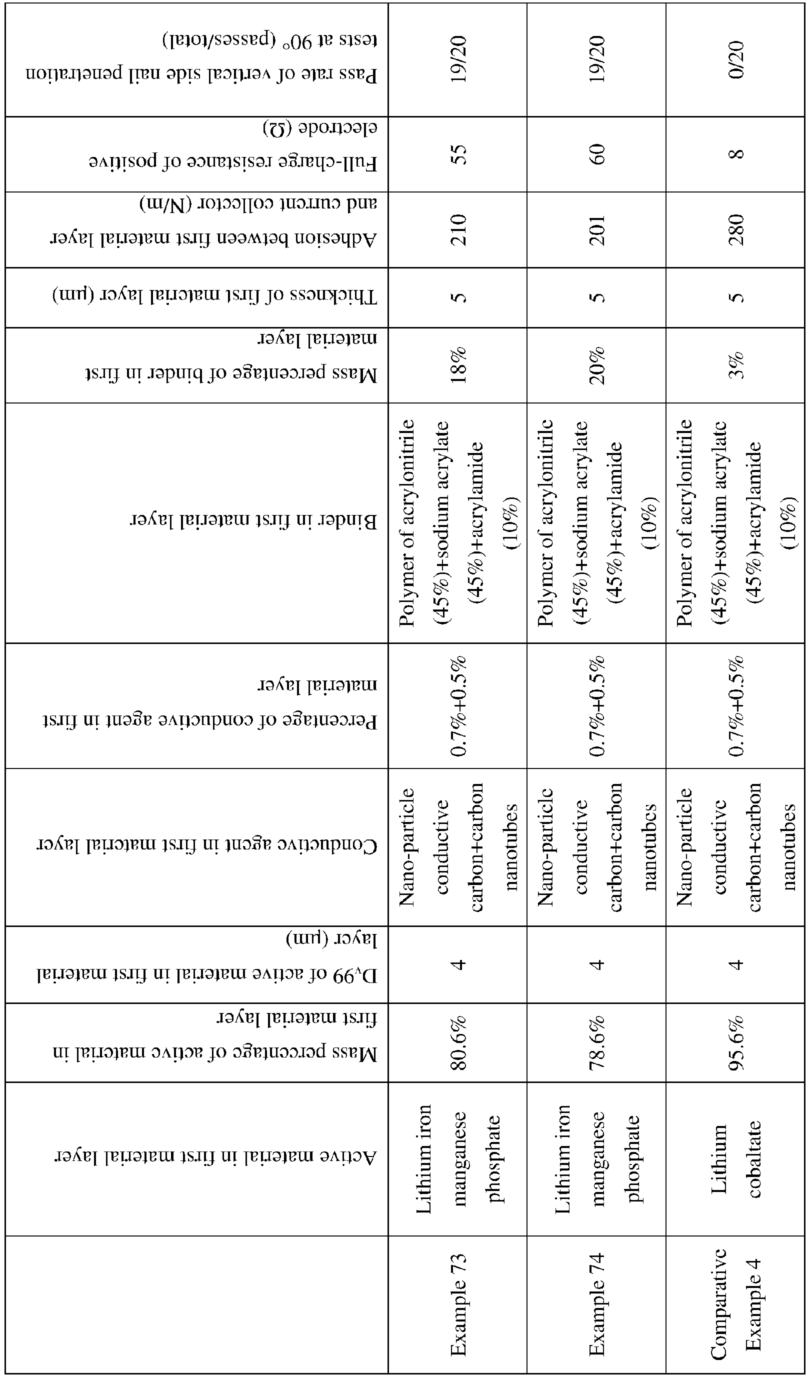

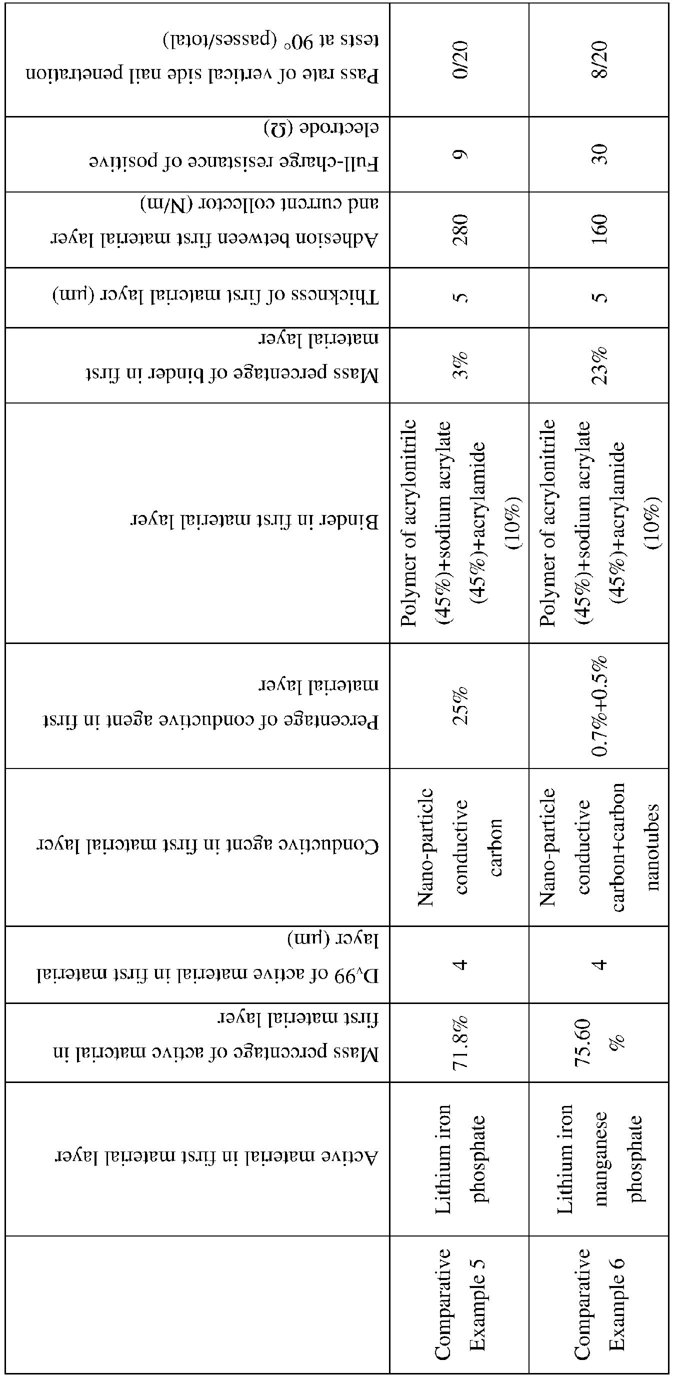

It can be learned from Examples 1 to 19 and Comparative Examples 1 to 3 in Table 1 that the pass rate of vertical side nail penetration tests at 90° of the lithium-ion battery with the positive electrode of this application is significantly higher than that of the lithium-ion battery provided in the comparative examples. This indicates that the safety and reliability of the lithium-ion battery provided in this application are significantly improved.

It can also be learned from Examples 1 to 19 and Comparative Examples 1 to 3 in Table 1 that a difference between the maximum value and the minimum value of a thickness of the first material layer of the positive electrode plate provided in this application is smaller than that of the positive electrode plate provided in the comparative examples. This indicates that the first material layer on the positive electrode plate provided in the application has better uniformity in thickness.

It can also be learned from Examples 1 to 19 and Comparative Examples 1 to 3 in Table 1 that the positive electrode plate provided in this application can improve the safety and the reliability of the lithium-ion battery in this application, provided that the full-charge resistance falls within the protection scope of this application.

It can be learned from Examples 20 to 74 and Comparative Example 4 in Table 2 that the pass rate of vertical side nail penetration tests at 90° of the lithium-ion battery with the positive electrode plate of this application is significantly higher than that of the lithium-ion battery provided in the comparative examples. A possible reason may be that all of the lithium iron phosphate, the lithium iron manganese phosphate, and the lithium manganate oxide have greater full-charge resistance than the lithium cobaltate, and are less likely to catch fire or explode when a steel nail passes through. This shows that the safety and the reliability of the lithium-ion battery provided in this application are improved.

It can be learned from Examples 23 to 32 in Table 2 that with the increase of Dᵥ99 of the active material in the first material layer, the lithium-ion battery has a high pass rate of the nail penetration tests. This shows that provided that Dᵥ99 of the active material falls within the protection scope of this application, a lithium-ion battery with good safety performance can be obtained.

It can be learned from Examples 65 to 74 and Comparative Example 6 in Table 2 that provided that with a percentage of the binder in the first material layer within the protection scope of this application, the lithium-ion battery with the positive electrode in this application has a high pass rate of the nail penetration tests, thereby improving the safety and the reliability of the lithium-ion battery.

It can be learned from Examples 20 to 74 and Comparative Examples 4 to 5 in Table 2 that the full-charge resistance of the positive electrode plate provided in this application falls within the protection scope of this application, while the full-charge resistance in Comparative Examples 4 and 5 fall outside the protection scope of this application. A possible reason is that resistance of the lithium cobaltate in Comparative Example 4 is lower, and a percentage of the conductive agent in Comparative Example 5 is higher, thereby resulting in a zero pass rate of the nail penetration tests in Comparative Examples 4 and 5. This shows that the full-charge resistance of the positive electrode plate provided in this application falling within the protection scope of this application can improve the pass rate of the nail penetration tests of the lithium-ion battery, thereby improving the safety and reliability of the lithium-ion battery.

In conclusion, the positive electrode plate provided in this application has high uniformity in thickness, and there is strong adhesion between the current collector and the first material layer, and between the second material layer and the first material layer. The positive electrode plate is applied to the lithium-ion battery, so that probability of safety accidents caused by external forces such as impact or puncture can be effectively reduced, thereby improving the safety and reliability of the lithium-ion battery.

The foregoing descriptions are merely preferred embodiments of this application, but are not intended to limit this application. Any modification, equivalent replacement, or improvement made without departing from the spirit and principle of this application shall fall within the protection scope of this application.

## Claims

1. An electrochemical apparatus, comprising a positive electrode; wherein
the positive electrode comprises a current collector, a first material layer, and a second material layer; the second material layer is disposed on at least one surface of the current collector, the first material layer is disposed between the current collector and the second material layer; and
a difference between the maximum value and the minimum value of thickness of the first material layer is less than or equal to 3 µm.

2. The electrochemical apparatus according to claim 1, wherein the first material layer comprises a leveling agent, and the leveling agent is a polymer with a weight-average molecular weight of less than or equal to 50,000.

3. The electrochemical apparatus according to claim 2, wherein the leveling agent comprises at least one of a polymer of olefin derivatives, a carboxylate polymer, a siloxane polymer, an enoate polymer, an alcohol polymer, or an ether polymer.

4. The electrochemical apparatus according to claim 2, wherein the leveling agent comprises at least one of a sodium carboxylate polymer, a polymer of oxygen-containing propylene hydrocarbon derivatives, or polysiloxane.

5. The electrochemical apparatus according to claim 2, wherein the first material layer further comprises an active material, a binder, and a conductive agent; wherein
based on a total mass of the first material layer, a mass percentage of the active material ranges from 50% to 98.89%, a mass percentage of the binder ranges from 1% to 20%, a mass percentage of the conductive agent ranges from 0.1% to 20%, and a mass percentage of the leveling agent ranges from 0.01% to 10%.

6. The electrochemical apparatus according to claim 5, wherein the binder comprises at least one of a copolymer of propylene hydrocarbon derivatives, polyacrylates, an acrylonitrile multipolymer, or a carboxymethyl cellulose salt.

7. The electrochemical apparatus according to claim 6, wherein the binder comprises a polymer formed by polymerization of at least one monomer of acrylonitrile, acrylic salt, acrylamide, or acrylate.

8. The electrochemical apparatus according to claim 1, wherein a thickness of the first material layer ranges from 0.05 µm to 20 µm.

9. The electrochemical apparatus according to claim 1, wherein a resistance of the fully charged positive electrode is greater than 10 Ω.

10. The electrochemical apparatus according to claim 5, wherein a median particle size Dᵥ99 of the active material ranges from 0.01 µm to 19.9 µm.

11. The electrochemical apparatus according to claim 5, wherein the conductive agent comprises at least one of lamellar, reticular, linear, or zero-dimensional conductive agents.

12. The electrochemical apparatus according to claim 1, wherein a thickness of the second material layer ranges from 20 µm to 200 µm.

13. The electrochemical apparatus according to claim 1 or 5, wherein the positive electrode satisfies at least one of the following characteristics:
(a) the leveling agent comprises polyethoxy propoxy propylene hydrocarbon; or
(b) the conductive agent comprises at least one of graphene, reticular graphite fiber, carbon nanotubes, Ketjen black, graphite fiber, or nano-particle conductive carbon.

14. A method for preparing the electrochemical apparatus of to any one of claims 1 to 13, the method comprising:
forming the first material layer and the second material layer in sequence on at least one surface of the current collector, wherein the difference between the maximum value and the minimum value of the thickness of the first material layer is less than or equal to 3 µm.

15. An electronic apparatus, comprising the electrochemical apparatus according to any one of claims 1 to 13.
